# EUROPEAN PATENT APPLICATION

(11) **EP 4 593 190 A1**
(43) Date of publication of application: **30.07.2025**
(21) Application number: 23873142.6
(22) Date of filing: 26.09.2023
(51) Int. Cl.: H01M 50/636, H01M 50/152, H01M 50/169, H01M 50/531, H01M 50/249, H01M 50/60, H01M 50/375

(54) **LIQUID INJECTION PORT SEALING STRUCTURE FOR BATTERY CAN, BATTERY CELL COMPRISING SAME, BATTERY AND VEHICLE**

(30) Priority: 30.09.2022 KR 20220124981; 27.02.2023 KR 20230026246
(71) Applicant: LG Energy Solution, Ltd., Seoul 07335 (KR)
(72) Inventor: SHIN, Hangsoo, Daejeon 34122 (KR); HWANG, Dongsung, Daejeon 34122 (KR); CHO, Sungmin, Daejeon 34122 (KR); KIM, Do Gyun, Daejeon 34122 (KR)
(74) Representative: Goddar, Heinz J.
(86) International application number: PCT/KR2023/014889
(87) International publication number: WO 2024/072031

(57) **Abstract**

The present invention relates to a structure for sealing a liquid injection port of a battery cell. The battery cell comprises: a can having an open end at one end thereof in the axial direction; an electrode assembly accommodated inside the can; a cap for covering the open end of the can; a liquid injection port provided in the cap; and a finishing member inserted into the liquid injection port so as to finish the liquid injection port. The finishing member is sealed and fixed in a state of being inserted into the liquid injection port, by means of a sealing and fixing material that melts at a predetermined temperature. The finishing member includes a ball made of a metal material. The sealing and fixing material includes a synthetic resin layer coated on the surface of the ball, or includes solder, which is filled between the surface of the ball and the inner circumferential surface of the liquid injection port while the ball is inserted into the liquid injection port, so as to seal and fix the ball inside the liquid injection port.

## Description

### [TECHNICAL FIELD]

This application claims the benefit of priority based on Korean Patent Application No. 10-2022-0124981 filed on September 30, 2022, and Korean Patent Application No. 10-2023-0026246 filed on February 27, 2023, entire content disclosed in the document of the patent applications is included as a part of this specification.

The present invention relates to sealing structure of a liquid injection port of a battery can, a battery cell to which the same is applied, a manufacturing method of the battery cell, a battery pack including the battery cell, and a vehicle equipped with the battery pack.

### [BACKGROUND ART]

A cylindrical battery cell is a structure wherein a jelly-roll shaped electrode assembly is accommodated in a cylindrical metal can, and is more robust to shock and temperature than a pouch-type battery. Accordingly, the demand for using metal can-type cells as battery cells applied to vehicle battery packs is increasing.

The process of manufacturing a battery cell using a cylindrical can includes deep drawing a metal sheet to form a circular bottom and a circular tube-shaped sidewall member connected to the circular bottom, accommodating the electrode assembly in the can, and covering the open end of the sidewall member with a cap.

Crimping or seam welding may be applied to a structure wherein the open end of the battery can is covered with a cap and the cap and the battery can are fixed.

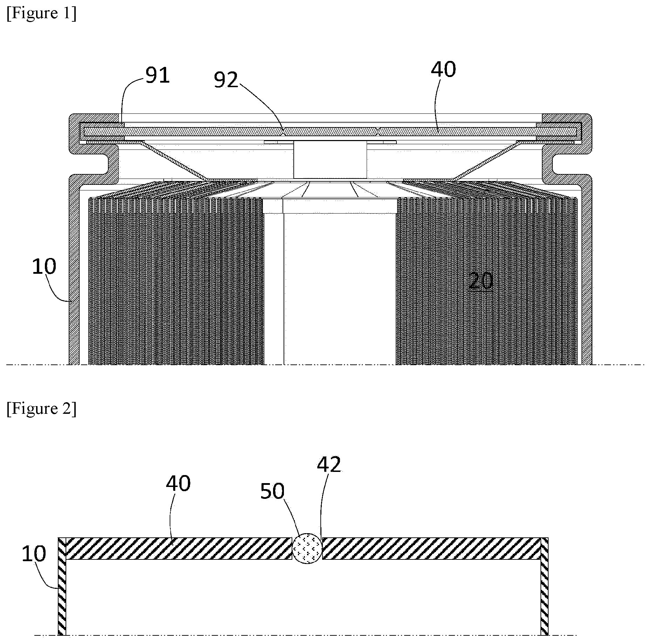

Referring to Figure 1, crimping is a method of fixing the cap 40 by physically pressing the edge of the cap 40 to the open end of the can 10 with the gasket 91 interposed therebetween. Since crimping is a physical fixing method without applying heat, crimping may be performed with the electrolyte solution filled in the can. Therefore, the crimping method is advantageous in that separate liquid injection port structure and sealing structure thereof are not required. However, since crimping is structurally more complex than welding, there are limits in securing the internal volume of the can that accommodates the electrode assembly 20.

Contrarily, as shown in FIG. 2, seam welding is a process of bringing the perimeter of the tip of the sidewall portion 11 of the battery can 10 into contact with the perimeter of the edge of the cap 40 and welding the same along the circumferential direction of the cap 40 such that more volume of the electrode assembly that may be accommodated in the battery can is secured due to the simplicity of the fixing structure of the cap 40. Therefore, the seam welding is more advantageous in securing electric capacity with respect to the volume of battery can.

However, when welding is performed by filling the battery can with an electrolyte solution and then covering the open end of the battery can with a cap, there is a possibility that the electrolyte solution may deteriorate or ignite due to the high-temperature generated by welding.

During the seam welding, for example, the surface temperature may rise up to 1400 degrees Celsius which is the melting point of SUS when the battery can and the cap are made of SUS. Such high-temperature heat may cause ignition of the electrolyte solution.

Thus, when the cap is to be fixed by subjecting the perimeter of the open end of the battery can and cap to seam welding, a method may be applied wherein a battery can 10 provided with a liquid injection port at the bottom portion or a cap 40 provided with a liquid injection port 42 are prepared; the electrolyte solution is injected through the liquid injection port 42 provided at the cap or the bottom portion of the battery can after accommodating the electrode assembly in the battery can and seam-welding the battery can 10 and the cap; and closing and sealing and the liquid injection port after completing the liquid injection.

For example, as shown in FIG. 2, a closing member such as a metal ball 50 may be press-fitted into the liquid injection port 42 to be fixed to the liquid injection port 42 and to seal the liquid injection port 42. That is, a metal ball 50 with a diameter larger than that of the inner circumferential surface of the liquid injection port 42 is forcibly press-fitted into the liquid injection port 42 such that the inner circumferential surface of the liquid injection port 42 and the surface of the metal ball 50 are compressed together by elastic deformations thereof to achieve sealing.

However, such structure is disadvantageous in securing the internal volume of the can since the sealing structure of the liquid injection port consumes the volume of the battery cell as much as the section where the ball is pressed in. Additionally, since a large pressure is applied toward the electrode to force the ball 50 into the liquid injection port 42, there is a possibility that the electrode may be damaged.

Meanwhile, when thermal runaway occurs inside the can of a battery cell, the inner pressure of the can increases and causes an explosion. To prevent such explosion from occurring, a venting structure may be applied to the can or cap. The general venting structure uses the principle that increased inner pressure as a result of the rise in the internal temperature caused by thermal runaway tears the soft part 92 of the cap or the can to discharge the inner pressure. **In** addition, the soft part is embodied by forming a notch 92 at a predetermined portion of the cap or the can as shown in FIG. 1 to facilitate damage at the corresponding part.

However, even when the welding method for fixing the cap is applied, which is advantageous in terms of securing more internal volume of the can for accommodating the electrode assembly, the separate liquid injection port and the closing structure thereof and venting structure described above consumes the internal volume of the can such that the internal volume of the can for accommodating the electrode assembly is ironically reduced again.

Meanwhile, embodying a venting structure through a liquid injection port may also be considered. However, since the liquid injection port has a small area, it is difficult to damage with pressure the closing member that seals the liquid injection port such that sealing and fixing forces are lost. Therefore, a closing member that loses the sealing and fixing forces thereof due to heat when high-temperature heat is generated inside the battery cell may be applied.

However, materials with low melting points such as synthetic resin materials typically have low rigidity and strength such that the sealing and fixing forces is weak. Therefore, using the materials with low melting points as a closing member by itself is bound to be a very unstable closing method of the liquid injection port.

### [DISCLOSURE]

### [TECHNICAL PROBLEM]

In order to solve above-described problems, it is an object of the present invention to provide a battery cell safety device wherein an electrolyte solution may be injected through a liquid injection port such that seam welding of the cap is possible while the liquid injection port is operating as a venting structure without a separate venting structure.

**In** addition, it is another object of the present invention to provide a structure of battery cell wherein the liquid injection port and the closing structure thereof do not consume space where the electrode assembly is accommodated, thereby maximizing the internal volume of the can accommodating the electrode assembly.

Additionally, it is yet another object of the present invention to provide a structure of battery cell wherein an electrolyte solution may be smoothly filled when injected into the can.

**In** addition, it is yet another object of the present invention to provide a sealing structure of the liquid injection port and a battery cell to which the same is applied wherein the liquid injection port may be sealed without applying strong force or high-temperature heat.

**In** addition, it is yet another object of the present invention to provide a sealing structure of the liquid injection port with excellent sealing and closing capabilities as well as smooth gas discharge when venting is required.

**In** addition, it is yet another object of the present invention to provide a battery cell with high energy density and a vehicle equipped battery pack to which the same is applied.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

**In** order to solve above-described problems, the present invention provides a closing structure of the liquid injection port that may be applied to a battery cell including a liquid injection port provided at a can or cap; and a closing member inserted into and closing the liquid injection port.

The can of the battery cell may have an open end at one axial end. An electrode assembly may be accommodated in the can. The cap may cover the open end of the can where the electrode assembly is accommodated.

The closing member is fixed to and seals the liquid injection port while inserted in the liquid injection port through a sealing and fixing material having a predetermined melting point.

The melting point may be a temperature at which the battery cell melts due to heat generated from thermal runaway. The melting point may be lower than that of the closing member, the cap and the can. The temperatures may be equal to or higher than 100 degrees Celsius and equal to or lower than 500 degrees Celsius.

The closing member is securely fixed in the liquid injection port through a sealing and fixing material. **In** the absence of the sealing and fixing material, the closing member may easily fall out of the liquid injection port.

The closing member, the cap and the can may include metal material.

The closing member may include a ball.

The sealing and fixing material may include a synthetic resin layer coated on the surface of the ball.

When the ball is inserted into the liquid injection port, the sealing and fixing material is compressed between the inner circumferential surface of the liquid injection port and the surface of the ball such that the ball is fixed to and seals the liquid injection port.

When thermal runaway of the battery cell occurs, the synthetic resin layer may melt and lose the sealing function achieved by compression of the synthetic resin layer. As a result, the high-pressure gas inside the can may be discharged to outside through the liquid injection port.

The sealing and fixing material may include a solder filled between the surface of the ball and the inner circumferential surface of the liquid injection port with the ball inserted in the liquid injection port so as to fix the ball to and seal the liquid injection port.

The solder may include lead-free solder.

When thermal runaway of the battery cell occurs, the solder melts. As a result, the solder is not able to withstand the inner pressure of the can. Then, the high-pressure gas inside the can may be discharged to outside through the liquid injection port.

The diameter of the ball may be equal to or smaller than the inner diameter of the liquid injection port. Accordingly, when the sealing and fixing material is heated and loses the sealing force thereof, high-pressure gas inside the can may be discharged through the gap between the inner circumferential surface of the liquid injection port and the ball.

The liquid injection port includes a circular tube extending in the axial direction, and the circular tube may extend into the core hollow portion of the electrode assembly. The ball may be inserted into the circular tube to be fixed to and seal the circular tube.

Accordingly, despite the structure of the liquid injection port and the venting structure, it is possible to further secure the length of the electrode assembly in the axial direction, thereby further securing energy density with respect to the volume of the battery cell.

The circular tube may be provided with an air hole through which the air inside the can is discharged when the electrolyte solution is injected through the liquid injection port.

During the liquid injection process, the lower end of the circular tube is disposed lower than the upper end of the electrode assembly. Accordingly, the air inside the can may be trapped and not be discharged to outside to form an air pocket in the space between the circumferential wall of the can and the circular tube. As a result, there is a risk that the portion of the electrode assembly present in the space may not be smoothly impregnated with the electrolyte solution.

The air hole may be provided in the circular tube at a location higher than the upper end of the electrode assembly. As a result, air pockets are not formed in the space and the electrolyte solution fills up smoothly when the electrolyte solution is injected.

The air hole may be sealed by the sealing and fixing material that seals between the inner circumferential surface of the liquid injection port and the surface of the ball after completing liquid injection and inserting the ball into the liquid injection port.

The air hole may be sealed by the solder. The diameter of the air hole may be such that air may flow while the solder does not flow into the air hole because of the viscosity and surface tension of thereof.

**In** addition, in order to solve above-described problems, the present invention provides a battery cell including: a can with one open end; an electrode assembly accommodated in the can; a cap covering the open end of the can; a liquid injection port provided at the can or the cap; a closing member inserted in the liquid injection port; and a sealing and fixing material fixing the closing member inserted in the liquid injection port to the liquid injection port.

The liquid injection port has a perforated section extending in a first direction crossing outside and inside of the battery cell, and has a cross-section defined by an intersection of an imaginary plane extending in a second direction intersecting the first direction and an inner circumferential surface thereof.

The closing member extends in the first direction, and has a cross-section defined by an intersection of the imaginary plane extending in the second direction and an outer circumferential surface thereof.

At least a portion of the closing member in the first direction is disposed within the perforated section of the liquid injection port.

The sealing and fixing material is interposed between the inner circumferential surface of the liquid injection port and the outer circumferential surface of the closing member in the second direction.

The sealing and fixing material seals a space between the inner circumferential surface of the liquid injection port and the outer circumferential surface of the closing member to provide a sealed section corresponding to at least a portion of the section in the first direction and fixes the closing member within the injection port.

The sealing and fixing material has a melting point lower than that of the can or the cap where the liquid injection port is provided and that of the melting point of the closing member.

A minimum cross-section of the liquid injection port may be smaller than a maximum cross-section of the closing member, and be disposed further inward the sealed section in the first direction.

Accordingly, it is possible to prevent the closing member from falling into the inside of the can through the liquid injection port.

The liquid injection port may be defined by an inner circumferential surface of a circular tube extending from the can or the cap in the first direction.

As a result, it is possible to secure a sufficient section in the first direction for fixing the closing member inserted into the liquid injection port where the sealing and fixing material is interposed.

An inner end of the circular tube in the first direction may extend in an axial direction to be inserted in a core hollow portion of the electrode assembly.

As a result, the energy density of the battery cell may be further increased by preventing the circular tube from consuming space in the battery cell in the axial direction.

The circular tube may be provided with an air hole for discharging an air in the can when an electrolyte solution is injected through the liquid injection port.

The air hole may be disposed in the sealed section. Accordingly, even when the air hole is not blocked separately after injecting the electrolyte solution, the air hole may be shielded during the process of closing the liquid injection port.

The outer circumferential surface of the closing member may not be in direct contact with the inner circumferential surface of the liquid injection port. Accordingly, when the sealing and fixing material loses the sealing force and the fixing force thereof, a space for venting of the battery cell may be secured between the closing member and the inner circumferential surface of the liquid injection port.

The sealing and fixing material may be connected to the outer circumferential surface of the closing member in the sealed section and may be in contact with the inner circumferential surface of the liquid injection port.

The sealing and fixing material may be provided integrally fixed to the outer circumferential surface of the closing member.

The sealing and fixing material includes a synthetic resin layer coated on a surface of the closing member.

An elastic modulus of the sealing and fixing material may be smaller than that of the closing member.

The elastic modulus of the sealing and fixing material may be smaller than that of the member constituting the inner circumferential surface of the liquid injection port.

The closing member may include metal material.

The sealing and fixing material has a cross-section defined by an intersection of an imaginary plane extending in the second direction and an outer circumferential surface thereof.

The cross-section of the sealing and fixing material at the sealed section is larger than that of the liquid injection port at the sealed section so as to be compressed inward in the second direction by the inner circumferential surface of the liquid injection port to correspond to the cross-section of the liquid injection port.

During the compression process of the sealing and fixing material, the member defining the inner circumferential surface of the liquid injection port may be hardly deformed.

During the compression process of the sealing and fixing material, the closing member may be hardly deformed.

The cross-section of the closing member gradually becomes smaller further inward from the sealed section toward the inside of the can in the first direction. Accordingly, when the closing member is press-fitted into the liquid injection port, the sealing and fixing material may be smoothly inserted into the liquid injection port, and as press-fitting progresses, the sealing and fixing material may be naturally and elastically compressed in the second direction.

The inner end of the sealing and fixing material in the first direction may cover the closing member in the first direction. Accordingly, when the closing member is press-fitted, it is possible to prevent the sealing and fixing material from detaching from the surface of the closing member due to tensile force in the first direction.

The cross-section of the closing member at a location further inward the sealed section in the first direction may gradually become smaller toward inside of the can in the first direction. Accordingly, the thickness of the sealing and fixing material may be secured, thereby preventing the sealing and fixing material from breaking due to tensile force in the first direction when the closing member is press-fitted.

The closing member may include a ball, and the sealing and fixing material is coated integrally on the ball.

The inner circumferential surface of the liquid injection port extends parallel to the first direction in the sealed section. That is, the cross-section of the liquid injection port in the sealed section may be constant along the first direction.

Each of the cross-section of the liquid injection port and the cross-section of the closing member may be circular.

The cross-section of the sealing and fixing material may be circular.

The outer circumferential surface of the closing member may be in contact with the inner circumferential surface of the liquid injection port.

The outer circumferential surface of the closing member and the inner circumferential surface of the liquid injection port are in line contact in a circumferential direction.

When the closing member is strongly pressed into the liquid injection port, at least one of the closing member and the inner circumferential surface of the liquid injection port is elastically deformed such that the closing member and the liquid injection port may come into surface contact in the circumferential direction.

Contrarily, when the closing member is lightly inserted into the liquid injection port, e.g., when a force equivalent to or slightly greater than that of gravity is applied to the closing member, the closing member is inserted into the liquid injection port only until the closing member comes in contact with the inner circumferential surface of the liquid injection port. As a result, the inner circumferential surface of the closing member and the liquid injection port is not substantially elastically deformed such that the closing member may be in line contact with the liquid injection port in the circumferential direction.

The outer circumferential surface of the closing member and the inner circumferential surface of the liquid injection port are in contact with each other at a section where the cross-section of the liquid injection port gradually becomes smaller toward inside of the can in the first direction.

Accordingly, when the sealing and fixing material loses the sealing force and the fixing force thereof, a space for venting may be secured between the closing member and the inner circumferential surface of the liquid injection port.

In the predetermined sections inner and outer in the first direction than where the outer circumferential surface of the closing member and the inner circumferential surface of the liquid injection port are in contact with each other, the slope of the inner circumferential surface of the liquid injection port may be constant.

The shape of the liquid injection port and the shape of the closing member may correspond to the shape of a rotating body rotated once around the center axis.

A decrease rate of a radius defining the cross-section of the liquid injection port toward the inside of the can in the first direction may be constant.

The outer circumferential surface of the closing member and the inner circumferential surface of the liquid injection port may be in contact with each other at a section where the cross-section of the closing member gradually becomes smaller toward inside of the can in the first direction.

The rate at which the cross-section of the closing member 50 decreases toward the inside of the can is greater than the rate at which the cross-section of the liquid injection port 42 decreases toward the inside of the can in a predetermined section of the perforated section inner in the first direction than where the outer circumferential surface of the closing member and the inner circumferential surface of the liquid injection port are in contact with each other.

The rate at which the cross-section of the closing member 50 decreases toward the inside of the can is smaller than the rate at which the cross-section of the liquid injection port 42 decreases toward the inside of the can in a predetermined section of the perforated section outer in the first direction than where the outer circumferential surface of the closing member and the inner circumferential surface of the liquid injection port are in contact with each other.

Accordingly, the outer circumferential surface of the closing member 50 and the inner circumferential surface of the liquid injection port may not compress each other in the second direction in predetermined sections of the perforated section inner and outer in the first direction than where the outer circumferential surface of the closing member and the inner circumferential surface of the liquid injection port are in contact with each other such that friction force does may not act.

A location where the outer circumferential surface of the closing member and the inner circumferential surface of the liquid injection port are in contact with each other may be provided further inward in the first direction than where the closing member has a maximum cross-section.

Accordingly, when the sealing and fixing material loses the fixing force thereof, the closing member may be easily detached outward from the liquid injection port in the first direction.

The sealed section may be provided further outward in the first direction than where the outer circumferential surface of the closing member and the inner circumferential surface of the liquid injection port are in contact with each other.

The closing member may include metal material.

The sealing and fixing material may include a solder filled between the outer circumferential surface of the closing member and the inner circumferential surface of the liquid injection port with the outer circumferential surface of the closing member in contact with the inner circumferential surface of the liquid injection port.

The closing member may include a ball.

The electrode assembly may include a first electrode and a second electrode, and a tab of the first electrode and a tab of the second electrode may be disposed at two axial ends of the electrode assembly, respectively.

The tabs may be a portion of the metal foil of the first electrode and the second electrode, respectively, extending further outward in the axial direction from the two axial ends of the electrode assembly.

The tab may include a notched tab.

The tab may be bent in a radial direction.

Accordingly, the bent tab portion may provide a plane substantially perpendicular to the axial direction.

The tab may be bent toward radially inner side.

A first electrode terminal electrically insulated from and fixed to the bottom portion may be installed at the bottom portion provided on the opposite side of the open end in the axial direction of the can.

The bottom portion around the first electrode terminal may constitute a second electrode terminal 15, and a sidewall portion connected to the bottom portion may also constitute the second electrode terminal.

The first electrode of the electrode assembly may be connected to the first electrode terminal through a current collector plate 31 bonded to the tab of the first electrode.

Accordingly, the first electrode terminal may have first polarity.

The cap may include an electrode connecting part bonded to the tab of the second electrode of the electrode assembly by thermal bonding.

The thermal bonding may be performed before the injection of electrolyte solution.

The electrode connecting part may be recessed inward from the surface of the cap in the axial direction.

The electrode connecting part may extend flat in a radial direction.

The thermal bonding of the tabs of the cap and the second electrode may include one process selected from welding, brazing and soldering.

The thermally bonded portion may include a welding portion formed by a laser irradiated to the surface of the electrode connecting part in a scanning manner along a radial direction.

The liquid injection port may be provided at the center portion of the cap.

The electrode connecting part may extend radially around the liquid injection port.

A plurality of the electrode connecting parts may be provided. Each electrode connecting part may be recessed inward toward the inside of the can and extend in the radial direction.

Four electrode connecting parts may be provided.

The edge of the open end of the can may be bonded to the edge of the cap by thermal bonding.

The thermal bonding of the can and the cap includes one process selected from welding, brazing and soldering.

Accordingly, the cap, the sidewall portion connected to the cap, and the bottom portion connected to the sidewall portion may have a second polarity.

The thermal bonding may be performed before the injection of electrolyte solution.

The cap may have a base surface extending outward from the electrode connecting part in the axial direction.

The height of the bonding area of the cap and the can may be lower than that of the base surface and higher than that of the electrode connecting part. Accordingly, the bonding area may be protected, the closing structure of the liquid injection port may be protected, and venting may be performed smoothly as the liquid injection port is placed lower than the base surface.

The present invention provides a manufacturing method of a battery cell to which the sealing structure of the liquid injection port is applied.

The manufacturing method includes a can preparing step of preparing a can having a sidewall portion, a bottom portion connected to one axial end of the sidewall portion, and an open end provided at other axial end of the sidewall portion, and sealing, insulating and fixing a first electrode terminal at a center of the bottom portion.

The manufacturing method includes an electrode assembly preparing step of preparing an electrode assembly provided with a first electrode and a second electrode with a tab of the first electrode and a tab of the second electrode disposed at two axial sides thereof, respectively.

The manufacturing method includes a cap preparing step of preparing a cap provided with a liquid injection port.

The manufacturing method includes a first electrode terminal connecting step of accommodating the electrode assembly in the can in a manner that the tab of the first electrode faces the bottom portion of the can, and connecting the tab of the first electrode and the first electrode terminal after the can preparing step and the electrode assembly preparing step.

The manufacturing method includes a second electrode connecting step of connecting the cap to the tab of the second electrode after the electrode assembly preparing step and the cap preparing step.

The manufacturing method includes a cap fixing step of fixing the cap to the can after the first electrode terminal connecting step.

The manufacturing method includes a liquid injecting step of injecting an electrolyte solution into the can after the first electrode terminal connecting step, the second electrode connecting step and the cap fixing step.

The manufacturing method includes a liquid injection port closing step of: inserting the closing member into the liquid injection port; and sealing a space between an inner circumferential surface of the liquid injection port and an outer circumferential surface of the closing member with a sealing and fixing material having a melting point lower than a melting point of the cap provided with the liquid injection port and a melting point of the closing member after the liquid injecting step and the cap preparing step and fixing the closing member within the injection port.

According to the manufacturing method, the thermal bonding of the electrode assembly and the cap and the thermal bonding of the can and the cap may be performed before injecting electrolyte solution to prevent the bonding heat from affecting the electrolyte solution.

The liquid injection port closing step may be performed by press-fitting the closing member having the sealing and fixing material coated thereon into the liquid injection port to elastically compress the sealing and fixing material between the outer circumferential surface of the closing member and the inner circumferential surfaces of the liquid injection port.

The liquid injection port closing step may be performed by soldering the outer circumferential surface of the closing member to the inner surface of the liquid injection port with a sealing and fixing material with the closing member inserted into the liquid injection port, and the outer circumferential surface of the closing member in line contact with the inner circumferential surface of the liquid injection port.

The present invention provides a battery pack including the battery cell.

Additionally, the present invention provides a vehicle equipped with the battery pack.

### [ADVANTTAGEOUS EFFECTS]

According to the present invention, in closing a liquid injection port, by using a sealing and fixing material that fixes a closing member and seals a liquid injection port and is capable of losing sealing force and/or fixing force at a predetermined melting point, an electrolyte solution may be injected through the liquid injection port such that the liquid injection port itself functions as a venting structure without a separate venting structure while allowing seam welding of the cap.

Additionally, according to the present invention, since the structure for fixing the cap and the can and the structure for fixing the cap and the tabs of an electrode do not consume space, the energy density of the battery cell may be increased.

**In** addition, according to the present invention, since the liquid injection port having circular tube shape extends into the core hollow portion of the electrode assembly, the liquid injection port and the closing structure thereof do not consume the space for accommodating the electrode assembly. Thus, the internal volume of the can for accommodating the electrode assembly is maximized, thereby increasing the energy density of the battery cell. In addition, since the outer circumference of the liquid injection port having circular tube shape supports the separator surrounding the inner circumferential surface of the core hollow portion, the electrolyte solution may not damage the separator surrounding the inner circumferential surface of the core hollow portion during the injection process of the electrolyte solution.

In addition, according to the present invention, since the air inside the can is smoothly discharged through an air hole when the electrolyte solution is injected, and the air hole is closed when the liquid injection port is closed, of the electrode assembly may be smoothly impregnated with the electrolyte solution.

According to the present invention, since a pressing force strong enough to cause elastic deformation is not applied to the inner circumferential surface of the liquid injection port or the closing member, there is no risk of the cap being deformed or the electrode in the battery can being damaged.

According to the present invention, since high-temperature heat is not generated when the liquid injection port is closed, the heat applied while closing the liquid injection port may be prevented from being transferred to the electrolyte solution or electrode assembly and affecting battery performance.

According to the present invention, in the closing of the liquid injection port, a closing member with high strength and rigidity is used to close most of the cross-section of the liquid injection port, and a sealing and fixing material that provides a venting function due to a low melting point is interposed between the inner circumferential surface of the injection port and the closing member to fix the closing member to the injection liquid port.

As described above, according to the present invention, a sealing and fixing material is disposed in the space between the closing member with sufficient strength and rigidity and the inner circumferential surface of the liquid injection port and is prevented from being exposed to the outside such that the sealing and fixing material having less strength and rigidity is protected from being damaged by external impact and is reinforced with the inner circumferential surface of the liquid injection port and closing member, thereby advantageously ensuring both of the sealing function and the venting function.

In addition to the advantageous effects described above, specific effects of the present invention will be described further while describing specific details of the present invention.

### [BRIEF DESCRIPTION OF DRAWINGS]

FIGS. 1 and 2 are diagrams illustrating methods for closing the cap and electrolyte solution inlet of a conventional battery can.
FIGS. 3 to 8 are diagrams illustrating the sealing structure and the venting structure of a liquid injection port according to the first embodiment of the present invention.
FIGS. 9 to 16 are diagrams illustrating the sealing structure and the venting structure of the liquid injection port according to a second embodiment of the present invention.
FIG. 17 is a perspective view of the battery cell according to a third embodiment.
FIGS. 18 and 19 are perspective views illustrating the states before and after stacking the first electrode, second electrode and separators for manufacturing the electrode assembly to be accommodated in the battery can, respectively, and FIG. 20 is a plane view of the stacked state of FIG. 19.
FIGS. 21 and 22 are perspective and side views of an electrode assembly manufactured by winding the laminate of FIGS. 19 and 20 in a j elly-roll shape.
FIGS. 23 and 24 are perspective views illustrating the electrode assembly with a current collector plate attached to an upper portion thereof and without a current collector plate attached to a lower portion thereof.
FIG. 25 is a cross-sectional view illustrating a process of accommodating the electrode assembly of FIGS. 23 and 24 into a battery can.
FIG. 26 is a cross-sectional view illustrating a process of welding the first electrode terminal and the current collector plate.
FIG. 27 is a cross-sectional view illustrating a process of bonding the electrode connecting part of the cap to the tab of the second electrode of the electrode assembly, and bonding the edge of the cap around the open end of the battery can with a cap covering an open end of a battery.
FIGS. 28 and 29 are diagrams illustrating a process of injecting an electrolyte solution through a liquid injection port and sealing the liquid injection port.
FIGS. 30 to 32 are an upper perspective view, a lower perspective view and a plane view of the cap according to a fourth embodiment.
FIGS. 33 and 34 are cross-section views of the corresponding portion of FIG. 32.
FIG. 35 is a perspective view illustrating a cap attached to the lower portion of the electrode assembly.
FIGS. 36 and 37 are flowcharts illustrating manufacturing methods of a battery cell with a closing structure of the liquid injection port applied thereto according to a fifth embodiment and a sixth embodiment, respectively.
FIGS. 38 and 39 illustrate a battery pack with a battery cell according to the embodiment applied thereto, and a vehicle equipped with the battery pack.

### [DESCRIPTION OF REFERENCE NUMERALS]

10: can 11: sidewall portion 12: bottom portion 13: positive terminal (first electrode terminal) 14: terminal gasket 15: negative terminal (second electrode terminal) 19: insulator 20: electrode assembly 21: first electrode 22: second electrode 23: metal foil 24: active material layer25: coated area 26: non-coated area 27: notched tab 28: separator 29: core hollow portion 31: current collector plate 32: terminal connection 33: ring part 34: electrode connecting part 40: cap 41: electrode connecting part W: welding portion 42: liquid injection port 44: base surface 45: press-fit outer wall M: bonding area 48: circular tube 481: guide surface 483: air hole 50: closing member(ball) 52: sealing and fixing material 54: synthetic resin (layer) 56: solder(lead-free solder) 70: battery pack 71: housing 72: battery cell 80: vehicle

### [DETAILED DESCRIPTION OF THE INVENTION]

Hereinafter, preferred embodiments of the present invention will be described in detail with reference to the accompanying drawings.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of" used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected" to another element, the element may be directly connected to another element, or there may exist an interposing element in the middle. On the other hand, when an element is referred to as being "directly connected" to another element, it should be understood that there is no interposing element in the middle.

When an element is referred to as being "above" or "under" another element, it should be understood that there may exist an interposing element in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

Throughout the specification, "A and/or B" refers to A, B or A and B unless specifically stated otherwise, and "C to D" refers to from equal to or higher than C to equal to or lower D unless specifically stated otherwise.

In the description of the embodiments, "axial direction" refers to "a direction in which the axis constituting the winding center of the jelly-roll type electrode assembly extends", and "radial direction" refers to "a direction toward (centripetal) or away (centrifugal) from the axis," and "circumferential direction" refers to "a direction surrounding the axis."

### [FIRST EMBODIMENT]

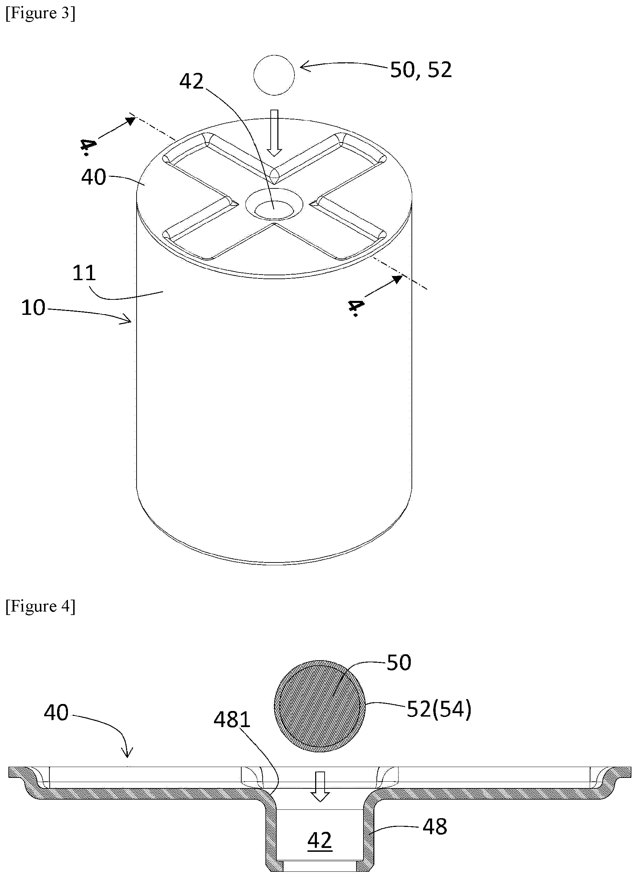

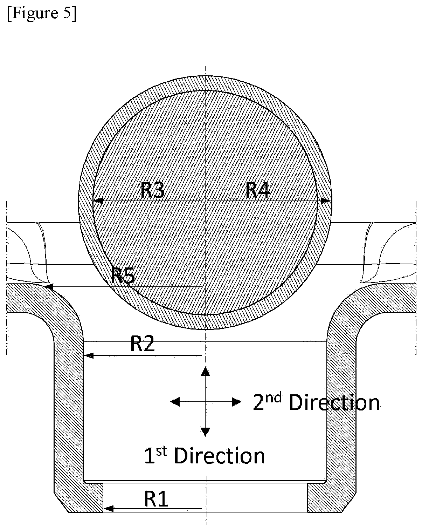

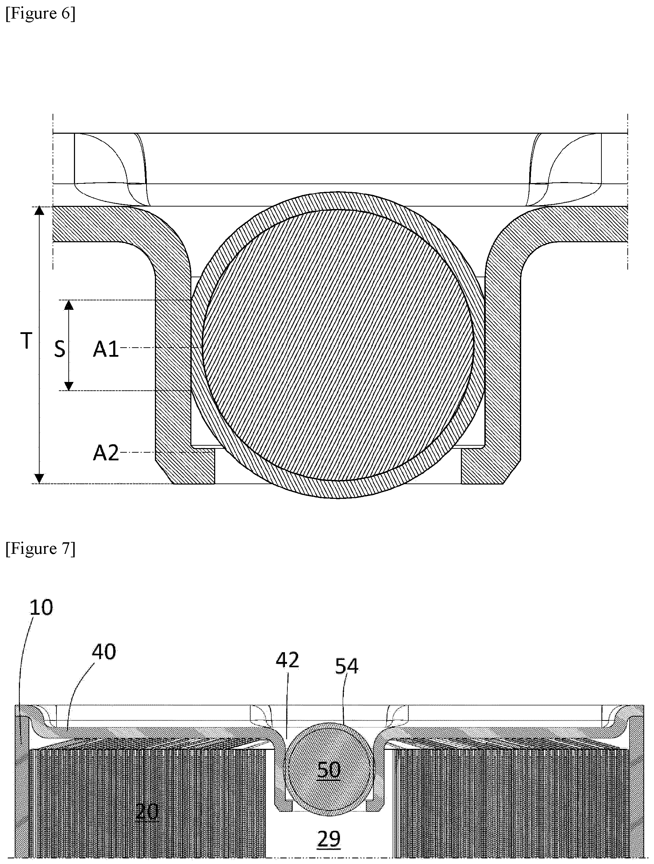

Hereinafter, with reference to FIGS. 3 to 8, the sealing structure of the liquid injection port according to a first embodiment of the present invention will be described.

The liquid injection port 42 according to the first embodiment is provided at the center portion of the cap 40.

The inner side surface of the cap 40 is electrically connected to the tab of the second electrode of the electrode assembly 20 accommodated in the can 10 of the battery cell. The edge of the cap 40 is bonded to and electrically connected to the edge of the open end of the can 10.

The electrolyte solution is injected into the can 10 through the liquid injection port 42 of the cap 40. After injection of the electrolyte solution is completed, the closing member 50 is inserted into the liquid injection port 42 and the closing member 50 is fixed to the inner circumferential surface of the liquid injection port 42 and seals the liquid injection port 42 with the sealing and fixing material 52.

The cap 40 may be manufactured by molding the metal sheet using a press. The liquid injection port 42 may be manufactured by drawing the center portion of the cap 40 in the first direction.

The first direction may be a direction crossing outside and inside of the battery cell.

The liquid injection port 42 may be defined by a circular tube 48 extending in the first direction from the center portion of the cap 40. That is, the inner circumferential surface of the circular tube 48 defines the liquid injection port 42. Hereinafter, it should be understood that the inner circumferential surface of the liquid injection port 42 refers to that of the circular tube 48.

The liquid injection port 42 has a perforated section extending in a first direction, and has a cross-section defined by an intersection of an imaginary plane T extending in a second direction intersecting the first direction and an inner circumferential surface thereof.

The first direction may be a direction corresponding to the axial direction of the electrode assembly 20 and the can 10. In addition, the second direction may correspond to the radial direction of the electrode assembly and the can. The first direction and the second direction may be orthogonal.

The cross-section of the liquid injection port 42 defined by the inner circumferential surface of the circular tube 48 may be circular.

The inner circumferential surface of the circular tube 48 extending in the axial direction may have a substantially constant cross-section along the axial direction. Strictly speaking, due to the nature of drawing process, the circular tube 48 may have a shape having a radius gradually decreasing toward the inside of the can in the first direction. However, when only the minimum inclination necessary for removing the mold after processing is given, it may be regarded as having a substantially constant cross-section.

The area where the circular tube 48 is connected to the cap 40 may be provided with a guide surface 481, which is a rounded section whose radius gradually decreases from R5 to R2 toward the inside of the can 10 in the first direction. The rounded section is naturally formed during the drawing process for manufacturing the circular tube 48, which may function as a guide surface for guiding the insertion of the closing member 50 into the liquid injection port 42.

The length of the circular tube 48 extending in the first direction defines the perforated section T of the liquid injection port 42. The perforated section T of the liquid injection port 42 may approximately correspond to the diameter of the closing member 50 or the synthetic resin layer 54. Accordingly, while the closing member 50 is fixed to and seals the liquid injection port 42, the closing member 50 may be prevented from protruding significantly into or from the liquid injection port 42 in the first direction.

Optionally, an inner end of the circular tube 48 in the first direction may extend inward in the second direction similar to an inward flange to have a reduced radius R1.

The liquid injection port 42 has a substantially constant overall diameter along the first direction such that the cross-section thereof may have a substantially constant shape, and the outer end thereof in the first direction has the shape of the guide surface 481, and inner end in the first direction may have an inward flange shape.

The radius R2 of the liquid injection port 42 is smaller than that of the core hollow portion 29 of the electrode assembly 20.

The actual radius R2 of the liquid injection port 42 may be equal to or larger than 1 mm and equal to or smaller than 10 mm. Preferably, the radius R2 may be equal to or larger than 2 mm and equal to or smaller than 8 mm.

The closing member 50 may include a ball 50 made of metal material, and the sealing and fixing material 52 may include synthetic resin having a predetermined thickness coated on the surface of the metal ball 50.

The elastic modulus of the material of the sealing and fixing material 52 is smaller than that of the material of the ball 50, and that of the material of the circular tube 48.

The elastic modulus of the sealing and fixing material 52 may be 0.2 times or less than those of the ball 50 and the circular tube 48.

The sealing and fixing material 52 may be coated on the entire surface of the metal ball 50. Accordingly, the closing member 50 having the surface thereof coated with a synthetic resin layer 54 has no orientation such that manufacturing and handling are facilitated.

It can be seen that the cross-sections of the closing member 50 having a ball shape defined by a plane perpendicular to the first direction are all circular. Additionally, it can be seen that the closing member 50 has the maximum cross-section with a radius R3 at the center portion in the first direction, and the radius gradually decreases and the cross-section gradually decreases accordingly toward the inside or the outside of the can away from the center portion in the first direction.

The sealing and fixing material 52 may have a cross-section defined by the intersection of an imaginary plane extending in the second direction and an outer circumferential surface of the sealing and fixing material 52. Since the sealing and fixing material 52 is also laminated to a predetermined thickness on the surface of the metal ball 50, it can be seen that the cross-section of the sealing and fixing material 52 is similar to that of the closing member 50. However, it can be seen that the sealing and fixing material 52 has a larger cross-section corresponding to the thickness thereof compared to the closing member 50.

Hereinafter, in the description of the closing member 50 and the sealing and fixing material 52, the areas of the cross-sections are compared based on radii thereof since the cross-sections of the closing member 50 and the sealing and fixing material 52 are all circular.

The thickness of the sealing and fixing material 52, i.e., R4-R3 may be approximately 0.1 mm or more and 5.0 mm or less. When the thickness is less than 0.1 mm, there is a possibility that the sealing and fixing material 52 may be damaged during the press-fitting process of the closing member 50. Even when the sealing and fixing material 52 is not damaged, it may be difficult to ensure the sealing force. When the thickness is 5.0 mm or more, the metal ball 50 must be smaller as the diameter of the liquid injection port 42 is limited, resulting in the metal ball 50 not properly functioning as a frame supporting the overall shape of the sealing and fixing material 52.

Radius R3 of the maximum cross-section of the closing member 50 is equal to or smaller than radius R2 of the cross-section of the liquid injection port 42. In the embodiment, it is exemplified that the maximum cross-section of the closing member 50 is slightly smaller than the cross-section of the liquid injection port 42. That is, the difference R2-R3 may be approximately greater than 0 mm and equal to or less than 2.0 mm.

Radius R4 of the maximum cross-section of the sealing and fixing material 52 is greater than radius R2 of the cross-section of the liquid injection port 42. The thickness R4-R3 of the sealing and fixing material 52 is about 1.1 to 5 times the difference R2-R3 between the radiusR2 of the liquid injection port 42 and the radius R3 of the ball 50.

When the metal ball 50 coated with the synthetic resin layer 54 is press-fitted into the liquid injection port 42, the synthetic resin layer 54 is compressed and the metal ball 50 is fitted into the liquid injection port 42. Here, since the diameter of the metal ball 50 is not larger than the inner diameter of the liquid injection port 42, a large pressing force is not required, and the amount of deformations of the metal ball 50 and the circular tube 48 are smaller than that of the synthetic resin layer 54.

With the closing member 50 inserted in the liquid injection port 42, at least a portion of the closing member 50 in the first direction is disposed within the perforated section T of the liquid injection port 42. Preferably, the center of the ball 50 may be disposed at the center of the circular tube 48 in the lengthwise direction.

With the closing member 50 inserted in the liquid injection port 42, the sealing and fixing material 52 is interposed between the inner circumferential surface of the liquid injection port 42 and the outer circumferential surfaces of the closing member 50 in the second direction.

The sealing and fixing material 52 shields the space between the inner circumferential surface of the liquid injection port 42 and the outer circumferential surface of the closing member 50 in the sealed section S, which is at least a portion of the perforated section in the first direction, and fixes the closing member 50 within the liquid injection port 42.

The sealed section S is preferably disposed approximately in the center portion of the perforated section T.

The cross-section of the sealing and fixing material 52 disposed in the sealed section S is larger than that of the liquid injection port 42 in the sealed section. Accordingly, the sealing and fixing material 52 is compressed inward in the second direction by the inner circumferential surface of the liquid injection port 42 so as to correspond to the cross-section of the liquid injection port 42.

The point A1 where the maximum cross-section of the closing member 50 is disposed is approximately at the center of the sealed section S.

Since the sealing and fixing material 52 has a shape corresponding to the surface of a sphere, the cross-section thereof gradually becomes smaller further inward from the sealed section S toward the inside of the can in the first direction. Accordingly, when the closing member 50 is press-fitted into the liquid injection port 42, the sealing and fixing material 52 may be smoothly inserted into the liquid injection port 42, and as press-fitting progresses, the sealing and fixing material 52 may be naturally and elastically compressed in the second direction.

Since the sealing and fixing material 52 surrounds the entirety of the metal ball 50, the inner end of the sealing and fixing material 52 covers the closing member 50 in the first direction. As a result, when the closing member 50 is press-fitted, the sealing and fixing material 52 may be prevented from being detached from the surface of the closing member 50 due to tensile force in the first direction.

Since the closing member 50 is a metal ball 50, the cross-section thereof gradually becomes smaller further inward from the sealed section S toward the inside of the can in the first direction. Accordingly, the thickness of the sealing and fixing material 52 laminated on the surface of the closing member 50 may be secured in the corresponding section such that the sealing and fixing material 52 may be prevented from breaking due to tensile force in the first direction when the closing member 50 is press-fitted.

The melting point of the sealing and fixing material 52 is lower than those of the can 10 or cap 40 provided with the liquid injection port 42 and the closing member 50. The melting point of the synthetic resin layer 54 may be equal to or higher than 100 degrees Celsius and equal to or lower than 300 degrees Celsius.

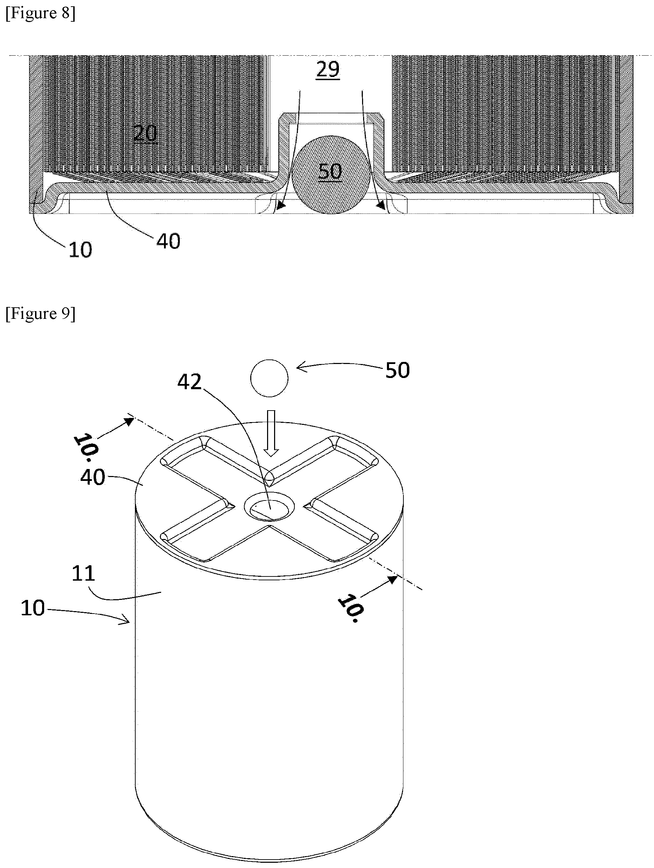

Accordingly, when thermal runaway of the battery cell occurs, the synthetic resin layer 54 melts and loses the sealing force thereof as well as the fixing force thereof for the ball 50 as shown in FIG. 8. As a result, venting may be performed smoothly through the space between the ball 50 and the inner circumferential surface of the liquid injection port 42.

The radius R1 of the minimum cross-section of the liquid injection port 42 is located at the inner end A2 of the liquid injection port 42 in the first direction, which is smaller than that of the maximum cross-section R3 of the closing member 50.

The location A2 of the minimum cross-section of the liquid injection port 42 in the first direction is located further inside than the sealed section S. Accordingly, even when the sealing and fixing material 52 melts and loses the fixing force for the closing member 50, there is no risk of the closing member 50 falling into the can 10 through the liquid injection port 42.

Meanwhile, the circular tube 48 defining the liquid injection port 42 may extend into the core hollow portion 29 of the electrode assembly 20 in the axial direction. The upper end of the separator wound around the inner circumferential surface of the core hollow portion of the electrode assembly 20 is disposed higher than the lower end the circular tube 48.

Therefore, the phenomenon of the separator being loosened or deformed caused by the flow of electrolyte solution that occurs when the electrolyte solution injected into the liquid injection port 42 hits the upper end of the separator at the inner circumferential surface of the core hollow portion 29 may be prevented.

Additionally, since it is not necessary to secure a separate space to add the liquid injection port and the closing structure thereof, the energy density of the battery cell is increased while adding a liquid injection port and venting structure.

**In** addition, since the can 10, the cap 40 and the tabs of the electrode are bonded at a high temperature such as welding before the injection of the electrolyte solution, the assembly process of the cap 40 does not have any adverse effect on the electrolyte solution.

### [SECOND EMBODIMENT]

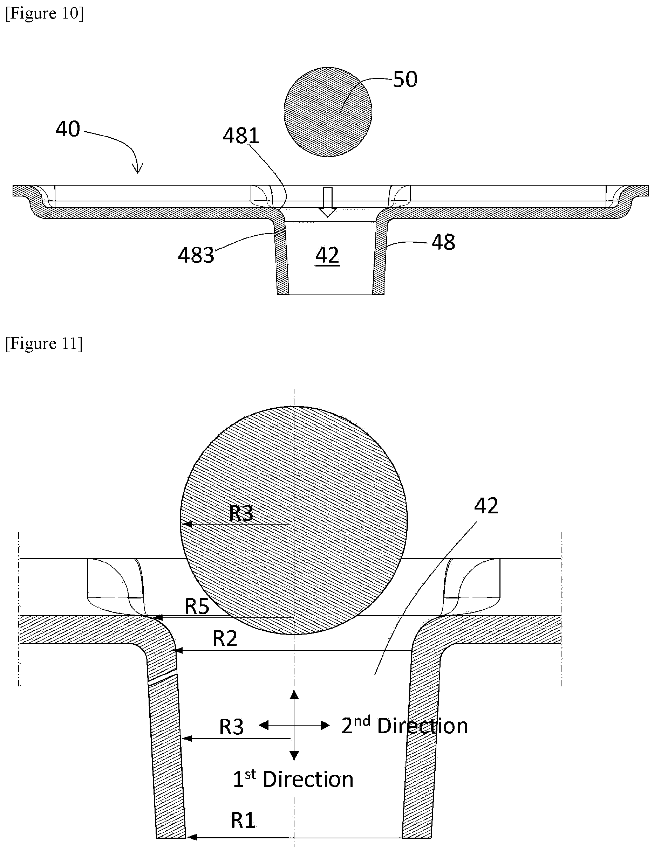

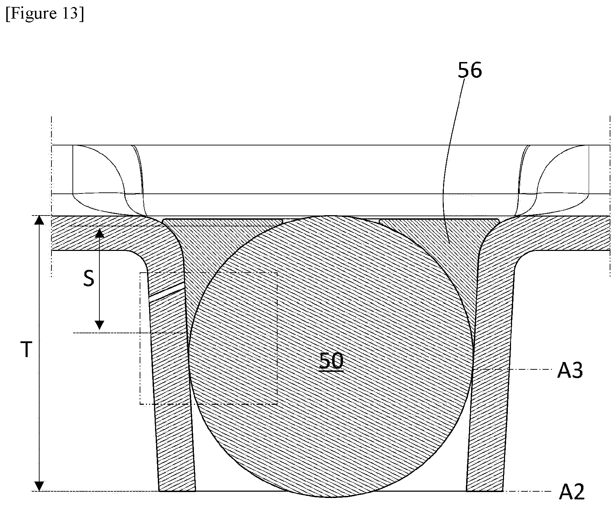

Hereinafter, a sealing structure of the liquid injection port according to a second embodiment of the present invention will be described with reference to FIGS. 9 to 16. The second embodiment will be described focused on the differences from the first embodiment. Therefore, it is apparent that content not described in one embodiment may be understood from the description of another embodiment. **In** addition, it should be understood that the configuration of one embodiment is applicable to other embodiments, and that substitution, deletion or addition between configurations of different embodiments is also possible.

The liquid injection port 42 may be defined by a circular tube 48 extending in the first direction from the center portion of the cap 40. According to the first embodiment, the liquid injection port 42 having a substantially constant cross-section in the first direction is exemplified. Contrarily, the perforated area of the liquid injection port 42 according to the second embodiment gradually becomes smaller toward the inside of the can in the first direction. That is, the circular tube 48 defining the liquid injection port 42 may be a tapered circular tube as shown. The taper angle may be about 1 to 5 degrees with respect to the first direction. That is, the decreases rate of the radius of the cross-section of the liquid injection port 42 toward the inside of the can in the first direction may be constant.

Accordingly, the radius of the cross-section of the liquid injection port 42 decreases from R5 to R2 along the rounded inner circumference of the guide surface 481, and then steadily decreases to R1 toward the inside of the can in the first direction.

The closing member 50 may be a spherical metal ball 50. The radius R3 of the closing member 50 is smaller than the maximum radius R2 and larger than the minimum radius R1 of the tapered section of the liquid injection port 42.

The radius R3 of the closing member 50 may be determined in a manner that the closing member 50 be located near the center portion of the perforated section T of the liquid injection port 42 when the closing member 50 is inserted into the liquid injection port 42.

Unlike the first embodiment, the sealing and fixing material 52 according to the second embodiment may be provided separately from the closing member 50. In addition, the sealing and fixing material 52 according to the second embodiment fills the space between the outer circumferential surface of the closing member 50 and the inner circumferential surface of the liquid injection port 42 with the closing member 50 being inserted in the liquid injection port 42, fixes the closing member 50 to the liquid injection port 42, and seal the space between the closing member 50 and liquid injection port 42.

The sealing and fixing material 52 may include solder 56 with a lower melting point than the cap 40 or the ball 50. The solder 56 may include a lead-free solder. The melting point of the solder 56 may be equal to or higher than 300 degrees Celsius and equal to or lower than 500 degrees Celsius.

Accordingly, when the sealing and fixing material 52 is melted to fill the space between the outer circumferential surface of the closing member 50 and the inner circumferential surface of the liquid injection port 42, the inner circumferential surface of the liquid injection port 42 and closing member 50 may remain in a solid state.

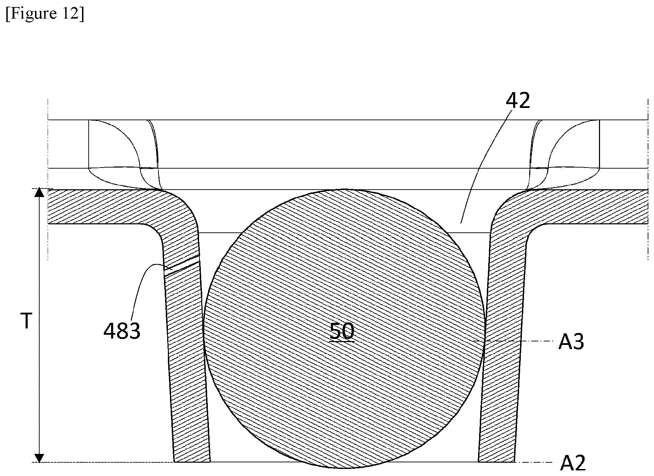

According to the sealing structure of the liquid injection port of the second embodiment, first, the closing member 50 is inserted into the liquid injection port 42 as shown in FIG. 12. As a result, the outer circumferential surface of the closing member 50 comes in contact with the inner circumferential surface of the liquid injection port 42.

The closing member 50 is not strongly pressed into the liquid injection port 42. That is, the closing member 50 is not strongly or forcefully fitted into the liquid injection port 42. The closing member 50 is inserted into the liquid injection port 42 with a light pressure. For example, the pressure may be a force equivalent to that of gravity or a force slightly greater than gravity.

When the closing member 50 is inserted into the liquid injection port 42 in this manner, the closing member 50 is pressed into the liquid injection port 42 only until the closing member 50 comes in contact with the inner circumferential surface of the liquid injection port 42. The closing member 50 and the inner circumferential surfaces of the liquid injection port 42 are not substantially elastically deformed as the closing member 50 is inserted into the liquid injection port 42 with light pressure. As a result, the outer circumferential surface of the closing member 50 and the inner circumferential surface of the liquid injection port 42 are in substantially line contact with each other in the circumferential direction.

This can be distinguished from the forced injection method in which the closing member 50 and the liquid injection port 42 are in surface contact with each other in the circumferential direction due to elastic deformation of at least one of the closing member 50 and the inner circumferential surface of the liquid injection port 42 caused by strong press-fitting of the closing member 50 into the liquid injection port 42.

Since the circular tube 48 has a straight tapered shape and the closing member 50 has a spherical shape, the outer circumferential surface of the closing member 50 and the inner circumferential surface of the liquid injection port 42 are in contact with each other at a section where the cross-section of the liquid injection port 42 gradually decreases toward the inside of the can in the first direction.

That is, in the predetermined sections inner and outer in the first direction than where the outer circumferential surface of the closing member 50 and the inner circumferential surface of the liquid injection port 42 are in contact with each other, the slope of the inner circumferential surface of the liquid injection port 42 may be constant.

Accordingly, when the sealing and fixing material 52 loses sealing and fixing forces thereof, a space for venting may be secured between the closing member 50 and the inner circumferential surface of the liquid injection port 42.

Since the closing member 50 is a spherical metal ball 50, and the circular tube 48 is tapered at a constant inclination, the rate at which the cross-section of the closing member 50 decreases toward the inside of the can is greater than the rate at which the cross-section of the liquid injection port 42 decreases toward the inside of the can in a predetermined section of the perforated section inner in the first direction than where the outer circumferential surface of the closing member and the inner circumferential surface of the liquid injection port are in contact with each other.

Similarly, the rate at which the cross-section of the closing member 50 decreases toward the inside of the can is smaller than the rate at which the cross-section of the liquid injection port 42 decreases toward the inside of the can in a predetermined section of the perforated section outer in the first direction than where the outer circumferential surface of the closing member and the inner circumferential surface of the liquid injection port are in contact with each other.

Accordingly, the outer circumferential surface of the closing member 50 and the inner circumferential surface of the liquid injection port 42 may not compress each other in the second direction in predetermined sections of the perforated section inner and outer in the first direction than where the outer circumferential surface of the closing member and the inner circumferential surface of the liquid injection port are in contact with each other such that friction force does may not act.

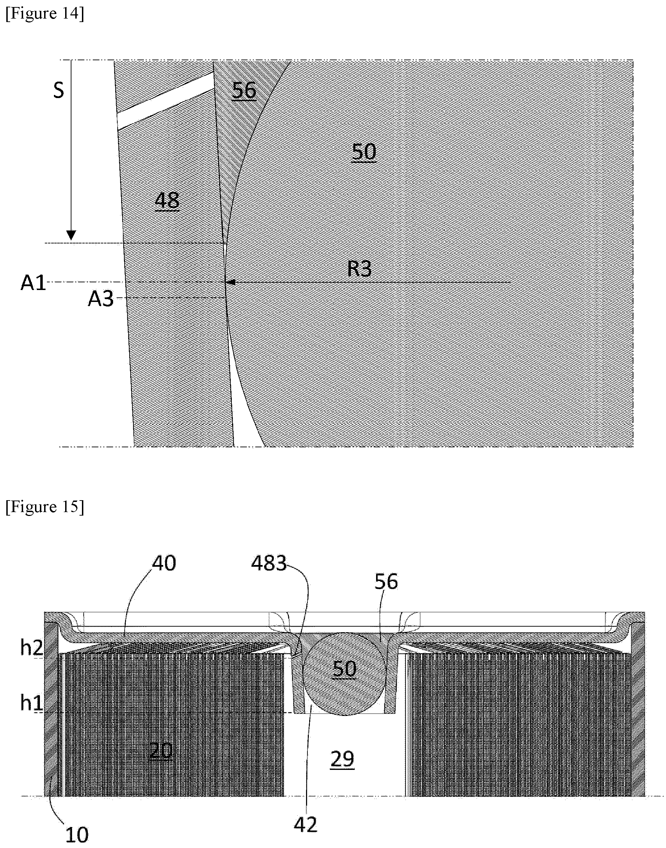

Referring to FIG. 14, the location A3 where the outer circumferential surface of the closing member 50 and the inner circumferential surface of the liquid injection port 42 are in contact with each other is disposed inner in the first direction than the location A1 where the closing member 50 has the maximum cross-section.

Accordingly, when the sealing and fixing material 52, which will be described later, loses the fixing force thereof, the closing member 50 may be easily detached outward from the liquid injection port 42 in the first direction.

With the closing member 50 placed within the liquid injection port 42 as above, the sealing and fixing material 52 may be fused between the inner circumferential surface of the liquid injection port 42 and the outer circumferential surface of the closing member 50 at a location outer in the first direction than the location A3 where the closing member 50 and the inner circumferential surface of the liquid injection port 42 are in contact with each other.

Accordingly, the sealed section S may be provided outer in the first direction than the location A3 where the closing member 50 and the inner circumferential surface of the liquid injection port 42 are in contact with each other.

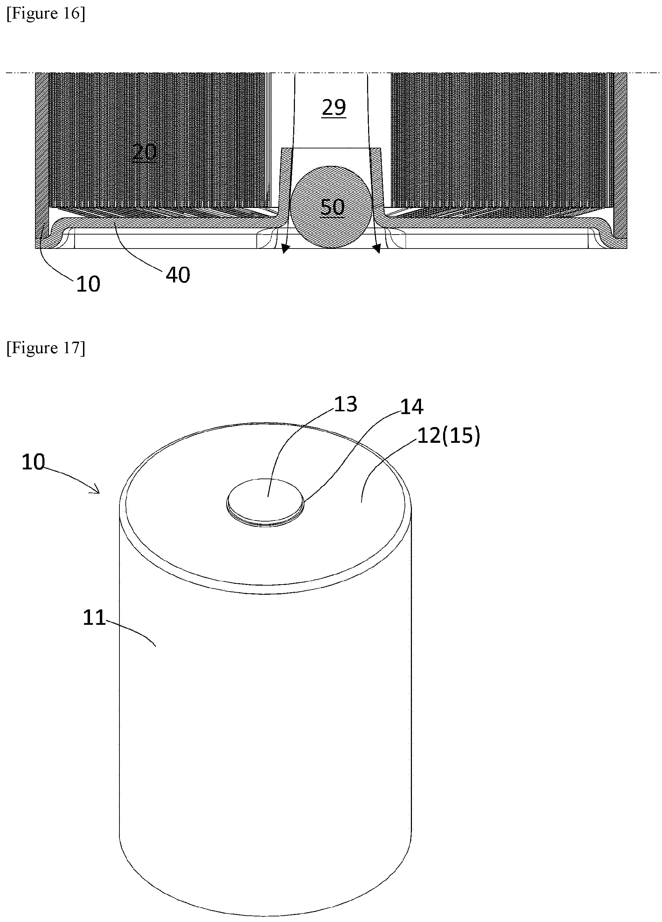

When thermal runaway of the battery cell occurs, the solder 56 melts. As a result, the solder 56 is not able to withstand the inner pressure of the can 10. Then, the high-pressure gas inside the can is discharged to outside through the liquid injection port 42 as shown in FIG. 16.

Additionally, the sealing structure of the liquid injection port according to the second embodiment differs from the first embodiment in that an air hole 483 is provided in the circular tube 48.

The inner end of the circular tube 48 in the first direction extends to be inserted in the core hollow portion 29 of the electrode assembly 20 in the axial direction. Here, the inner end of the circular tube 48 in the first direction may extend further inward into the can in the axial direction to height h1 of the inner end which is lower than required height h2 for impregnating the electrode assembly 20 with the electrolyte solution.

When the electrolyte solution is injected through the liquid injection port 42 in this state, the electrolyte solution fills up from the bottom portion 12 of the can 10. With the electrolyte solution filled up to the height h1 of the inner end, the space from the height h1 to the bottom surface of the cap 40 may be an air pocket space where air is trapped.

According to the embodiment, an air hole 483 is provided in the circular tube 48. The air hole 483 may be provided at a height corresponding to or higher than the required height h2 for immersing the electrode assembly 20 in the electrolyte solution. Thus, the air in the air pocket is discharged through the air hole 483 when the can is filled with the electrolyte solution. The can may be sufficiently filled with the electrolyte solution up to the upper end of the electrode assembly 20, i.e. the required height h2 for smooth impregnation.

The air hole 483 is disposed in the sealed section S. Accordingly, even when the air hole 483 is not blocked separately after the injection of the electrolyte solution, the air hole 483 is shielded together during the process of closing the liquid injection port with the sealing and fixing material 52. That is, the air hole 483 may be sealed along with the closing of the liquid injection port by the solder 56 sealing the inner circumferential surface of the liquid injection port 42 and the surface of the ball 50 without additional process after completing the injection of the electrolyte solution and inserting the ball 50 into the liquid injection port 42.

Apparently, the air hole 483 exemplified in the second embodiment may also be applied to the sealing structure of the liquid injection port according to the first embodiment. That is, in the first embodiment, when an air hole 483 is provided in the sealed section S where the synthetic resin layer 54 is pressed, the air hole 483 may be sealed in the process of closing the liquid injection port with the sealing and fixing material 52 similar to the second embodiment.

### [ASSEMBLY OF BATTERY CELL]

Hereinafter, with reference to FIGS. 17 to 29, a manufacturing method of a battery cell employing the above-described sealing structure of the liquid injection port and the structure of this battery cell according to the third embodiment will be described.

FIG. 17 illustrates a cylindrical battery cell.

The battery cell of the embodiment may be, for example, a cylindrical battery cell whose form factor ratio (defined as the diameter of the cylindrical battery cell divided by the height, that is, the ratio of the diameter Φ to the height H) is greater than approximately 0.4.

Here, the form factor refers to values representing the diameter and the height of a cylindrical battery cell. The cylindrical battery cell to be applied to the pressure tester may be, for example, a 46110 cell, a 48750 cell, a 48110 cell, a 48800 cell or a 46800 cell. **In** the values representing the form factor, the first two numbers represent the diameter of the cell, the next two numbers represent the height of the cell, and the last number 0 represents that the cross-section of the cell is circular.

The battery cell to be applied to the pressure tester may be a cell that is approximately cylindrical with a diameter of approximately 46 mm, a height of approximately **110** mm and a form factor ratio of 0.418.

A battery cell according to another embodiment may be a cell that is approximately cylindrical with a diameter of approximately 48 mm, a height of approximately 75 mm and a form factor ratio of 0.640.

A battery cell according to yet another embodiment may be a cell that is approximately cylindrical with a diameter of approximately 48 mm, a height of approximately **110** mm and a form factor ratio of 0.418.

A battery cell according to yet another embodiment may be a cell that is approximately cylindrical with a diameter of approximately 48 mm, a height of approximately 80 mm and a form factor ratio of 0.600.

A battery cell according to another embodiment may be a cell that is approximately cylindrical with a diameter of approximately 46 mm, a height of approximately 80 mm and a form factor ratio of 0.575.

The pressure tester of the present invention may be apparently applied to battery cells with a form factor ratio of approximately 0.4 or less, for example, 18650 cells, 21700 cells, etc. For an 18650 cell, its diameter is approximately 18 mm, its height is approximately 65 mm, and the form factor ratio is 0.277. For a 21700 cell, its diameter is approximately 21 mm, its height is approximately 70 mm, and the form factor ratio is 0.300.

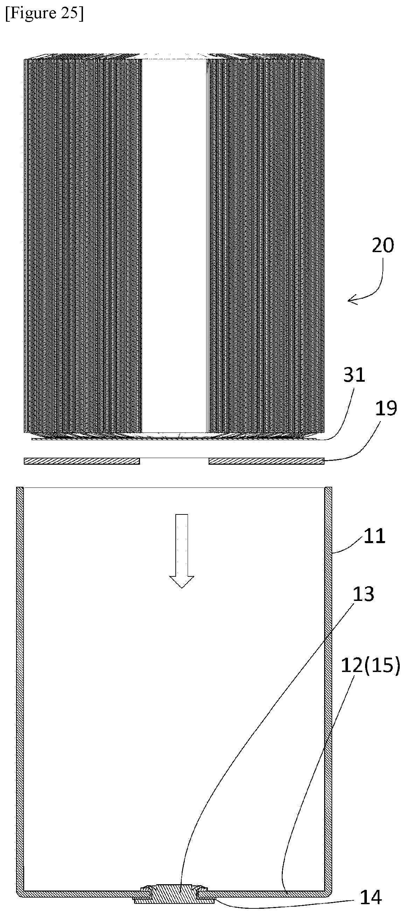

The battery can 10 includes a cylindrical sidewall portion 11 and a bottom portion 12 connected to one axial end of the sidewall portion 11. Here, the term 'bottom' is used since the bottom portion 12 is placed on the floor during the battery cell assembly process wherein the open end of the battery can 10 faces the upward direction as shown in FIGS. 25 to 29, and it should be understood that the bottom portion 12 may be placed at the top along with the first electrode terminal 13 as shown in FIG. 17 during the actual use of the battery cell.

The bottom portion 12 and the sidewall portion 11 of the battery can 10 may be integrated. For example, the battery can 10 may be manufactured by drawing a steel or aluminum sheet material. The opposite end of the sidewall portion 11 in the axial direction, which is not connected to the bottom portion 12, may form an open end.

A hole is formed in the center portion of the bottom portion 12, and the first electrode terminal 13 may be fitted into and coupled to the hole. The first electrode terminal 13 may be riveted and fixed to the bottom portion 12 with a terminal gasket 14 interposed therebetween. The terminal gasket 14 is interposed between the first electrode terminal 13 and the bottom portion 12 to seal the inside and outside of the battery can 10, thereby preventing leakage of the electrolyte solution, and electrically insulating the first electrode terminal 13 from the bottom portion 12.

However, the connection method between the first electrode terminal 13 and the bottom portion 12 is not limited thereto. For example, when the structure is capable of sealing between the first electrode terminal 13 and the bottom portion 12 and electrically insulating the first electrode terminal 13 from the bottom portion 12, various fixing methods, for example, bolt-nut fastening method, glass seal method and thermal bonding method of PP-MAH insulating gasket using an insulating film such as PP (polypropylene) material as a substrate are also applicable.

In an embodiment, the first electrode terminal 13 may have a first polarity, and the battery can 10 may have a second polarity. Accordingly, the bottom portion 12 of the battery can 10 and the sidewall portion 11 connected thereto may both have the second polarity.

Thus, both the first electrode terminal 13 and the second electrode terminal 15 may be disposed at one axial end of the battery can 10. Accordingly, both the busbar connected to the first electrode terminal 13 and the busbar connected to the second electrode terminal 15 may be located at one axial end of the battery can 10, i.e. the upper portion of the battery can 10.

In one example, the first electrode terminal 13 may be a positive terminal, and the second electrode terminal 15 may be a negative terminal. Apparently, it may be vice versa.

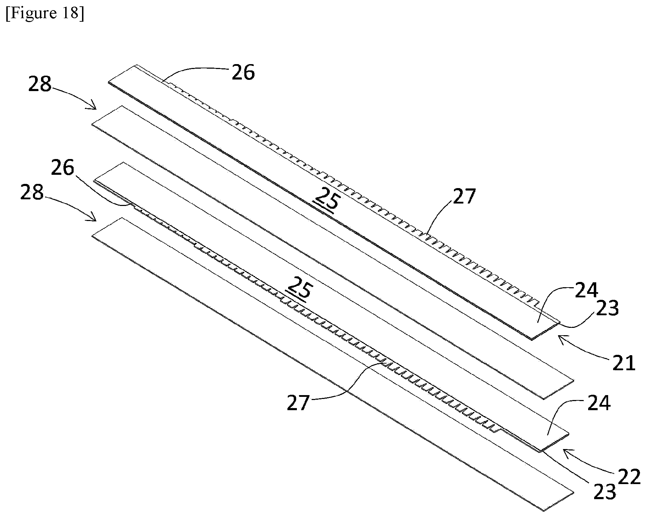

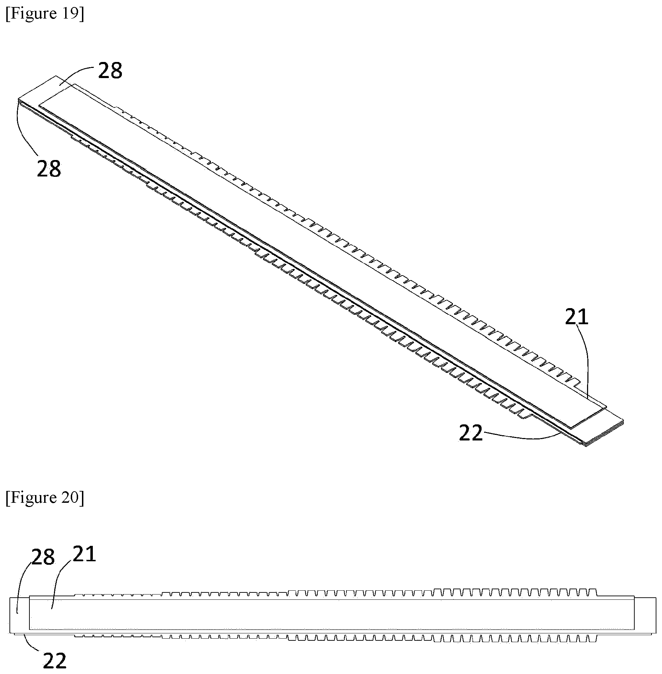

The electrode assembly 20 is accommodated in the battery can 10. The electrode assembly 20 is manufactured by: preparing the first electrode 21, the second electrode 22 and the separators 28 having a predetermined width and extending in the lengthwise direction as shown in FIG. 18; forming a laminate by sequentially stacking the first electrode 21, the separator 28, the second electrode 22 and the separator 28; and coiling the laminate to have a shape of a jelly-roll wound around the core axis as shown in FIGS. 19 and 20.

The first electrode 21 may be an anode, and the second electrode 22 may be a cathode. Apparently, it may be vice versa.

The first electrode 21 and the second electrode 22 are manufactured in a form of a sheet. The electrode sheet is manufactured by applying an active material layer 24 onto the surface of a metal foil 23. The electrode sheet includes a coated area 25 where the active material layer 24 is coated, and a non-coated area 26 where the active material layer 24 is not coated. The anode sheet is provided with the non-coated area 26 at one side in the widthwise direction, and the cathode sheet is provided with the non-coated area 26 at the other side in the widthwise direction.

The non-coated area 26 is exposed or protrudes from the laminate in the widthwise direction. The non-coated area 26 itself functions as an electrode tab.

Notches may be formed at predetermined intervals in the non-coated area 26 to form notched tabs 27 in the form of a flag.

**In** the embodiment, the notched tabs 27 are illustrated in the shape of an equilateral trapezoid. However, the notched tabs 27 may have various shapes such as semicircular, semielliptical, triangular, rectangular, parallelogram, etc.

Additionally, in the embodiment, the notched tabs 27 having the same width arranged in the lengthwise direction are exemplified. However, the width of the notched tabs may gradually widen from the core side to the outer circumferential side.

In addition, in the embodiment, the height of the notched tabs 27 gradually increases from the core side to the outer circumferential side. However, the height of the notched tabs may be constant or gradually decrease.

In addition, in the embodiment, a structure in which the notched tabs 27 are removed in predetermined sections of the centripetal end and the distal end of the non-coated area 26 is exemplified. However, it is apparent that the notched tabs may not be removed from the centripetal end of the non-coated area, and the notched tabs may not be removed from the distal end of the non-coated area.

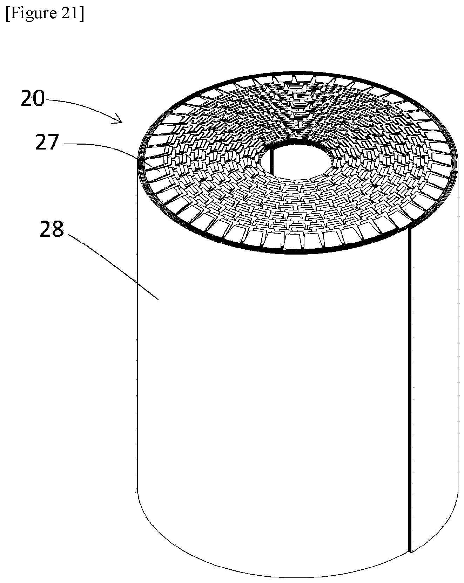

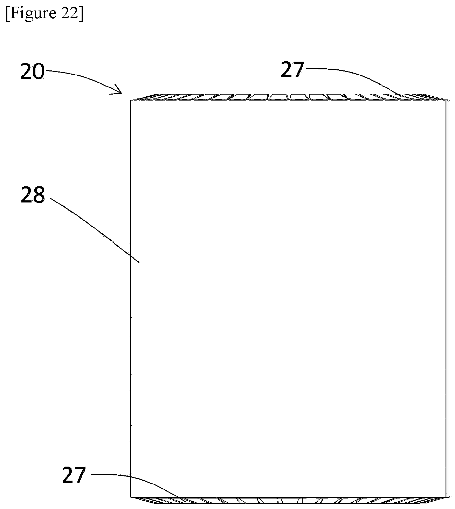

In the jelly-roll shaped electrode assembly 20, the notched tabs 27 may be bent in a radial direction and flattened. The notched tabs 27 may be bent inward or outward in the radial direction. In the embodiment, as shown in FIGS. 21 and 22, a structure in which the notched tabs 27 are bent inward in the radial direction is exemplified.

The notched tabs 27 may be bent one by one in the process of forming the jelly-roll shaped electrode assembly 20 by winding the laminate. Alternatively, the notched tabs 27 may be formed by bending the same all at once after winding the laminate to form a jelly-roll shaped electrode assembly.

The notched tabs 27 of the first electrode 21 and the notched tabs 27 of the second electrode 22, which are bent and overlapped in the radial direction as described above, may provide a plane substantially perpendicular to the axial direction at each of both axial ends of the electrode assembly 20 as shown in FIG. 22.

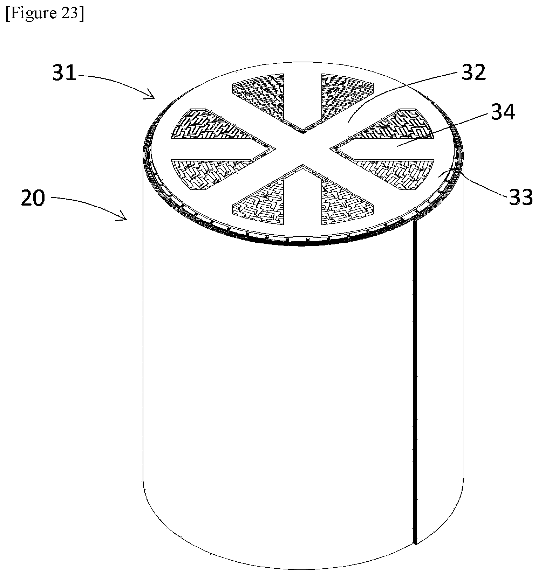

A current collector plate 31 may be bonded to the substantially flat surface provided by bending the notched tab 27 exposed at the both axial ends of the electrode assembly 20, respectively, as shown in FIG. 23.

The current collector plate 31 may be manufactured by punching, trimming, piercing and bending a metal sheet.

Referring to FIG. 23, the current collector plate 31 includes a terminal connecting part 32 extending from the center in the radial direction, and a ring part 33 connecting the distal edge of the terminal connecting part 32 in the circumferential direction, and an electrode connecting part 34 extending centripetally from the ring part 33 but not connected to the terminal connecting part 32. The center of the terminal connecting part 32 covers at least a portion of the core hollow portion of the electrode assembly 20.

The electrode connecting part 34 is bonded to the notched tabs 27 of the first electrode 21 of the electrode assembly 20 using a method such as laser welding before the electrode assembly 20 is inserted into the battery can 10.

Unlike the embodiment, in case of the battery cell having a different structure for example, the notched tab 27 of the first electrode 21 or the current collector plate 31 may be bonded and electrically connected to the bottom portion 12 of the battery can 10 by welding. That is, it should be understood that the third embodiment is an example of a battery cell to which the sealing structure of the liquid injection port may be applied. In other words, it should be clearly understood that the sealing structure of the liquid injection port described above is not a technology that may be applied only to the structure of battery cell disclosed in the third embodiment.

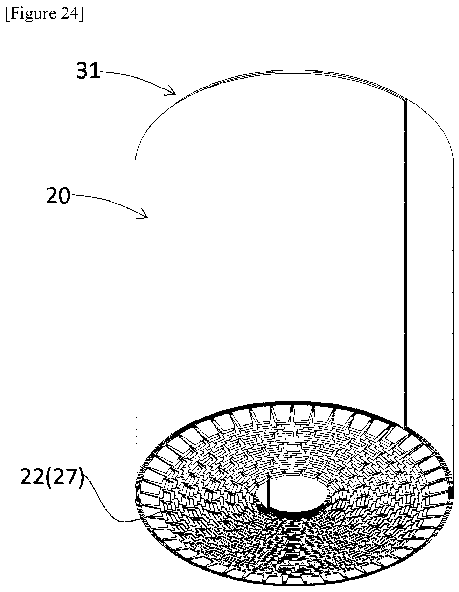

Referring to FIG. 24, the current collector plate may not be connected to the notched tab 27 of the second electrode 22 of the electrode assembly 20. The notched tab 27 may be bonded and electrically connected to the cap 40 by direct welding, etc., which will be described later.

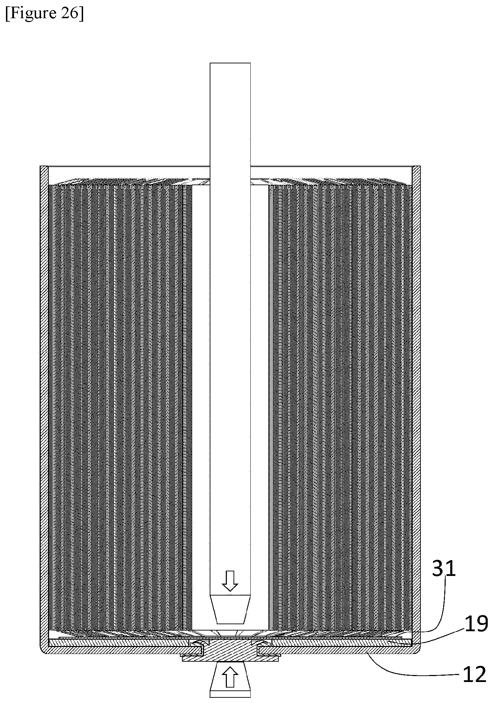

As shown in FIGS. 25 and 26, the electrode assembly 20 is accommodated in the battery can 10 with the current collector plate 31 aligned to face the bottom member 12 of the battery can 10. Here, an insulator 19 is interposed between the current collector plate 31 and the bottom member 12 of the battery can 10 to electrically insulate the first current collector plate 31 and the bottom member 12.

Additionally, the terminal connecting part 32 of the current collector plate 31 is bonded to the first electrode terminal 13 fixed to the battery can 10 by resistance welding, ultrasonic welding or laser welding. The welding device for welding the current collector plate 31 and the first electrode terminal 13 may perform welding by accessing the back side of the center of the terminal connecting part 32 of the current collector plate 31 from the other axial end of the electrode assembly 20 through the core hollow part of the electrode assembly 20. Apparently, in addition to the above-described welding method, the current collector plate 31 and the first electrode terminal 13 may be bonded by brazing or soldering.

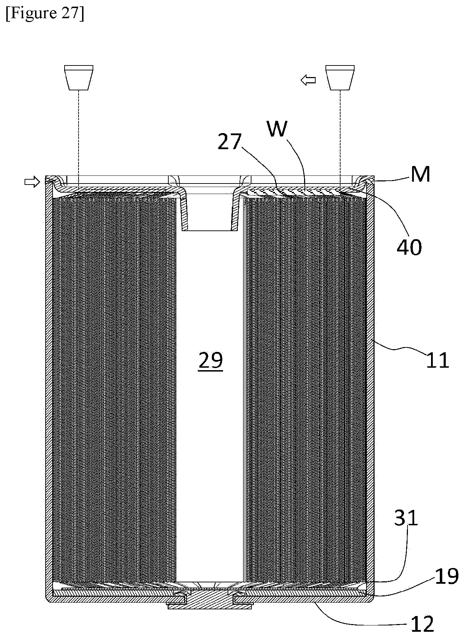

Referring to FIG. 27, the notched tab 27 of the second electrode 22 may be in direct contact with the cap 40 that covers the open end of the battery can 10 with the electrode assembly 20 accommodated in the battery can 10 and the first electrode 21 connected to the first electrode terminal 13.

With the cap 40 in close contact with the notched tab 27, a laser may be irradiated onto the surface of the cap 40 along the radial direction using a scan method as shown in FIG. 27 to form a welding portion W extending in the radial direction. Apparently, the laser may not be irradiated onto the section where the liquid injection port is provided in the scan path.

Accordingly, the second electrode 22 is electrically connected to the notched tab 27 and the welding portion W of the cap 40. Apparently, the notched tab 27 and cap 40 may also be bonded by methods such as brazing or soldering in addition to welding.

Unlike the embodiment, the tab of the second electrode 22 may be bonded and electrically connected to the inner circumferential surface of the sidewall portion 11 of the battery can 10.

In addition, unlike the above embodiment, the tab of the second electrode 22 may be bonded to the cap 40 or the sidewall portion 11 of the battery can 10 through a current collector plate (not shown).

Additionally, the tab of the second electrode 22 or the current collector plate connected thereto may be bonded and connected to both the inner circumferential surface of the sidewall portion 11 and the cap 40.

In addition, a separate second electrode terminal may be provided at the cap 40, and the tab of the second electrode 22 or the current collector plate 31 may be connected to the second electrode terminal.

Referring back to FIG. 27, the edge of the cap 40 is bonded to the open end of the sidewall portion 11 of the battery can 10 to be electrically connected, sealed and fixed. Accordingly, the second electrode 22 may be electrically connected to the cap 40 and the battery can 10. The bonding between the cap 40 and the battery can 10 can also be electrically connected and sealed using various methods such as welding, brazing and soldering.

Apparently, unlike the embodiment, the cap 40 may be fixed to the open end of the sidewall portion 11 of the battery can 10 using a compression sealing method such as crimping as well. It should be understood that even with such structure, the sealing structure of the liquid injection port described above may be applied.

In the process of welding the cap 40 and the sidewall portion 11, high-temperature heat may be generated. In case that an electrolyte solution is present in the battery can 10 during the welding process, the electrolyte solution may be denaturized or ignited due to the high-temperature heat generated during the welding process.

Accordingly, after the processing of the welding portion W and bonding area M, during which high-temperature heat is generated, is complete as described above, the electrolyte solution may be injected through the liquid injection port 42.

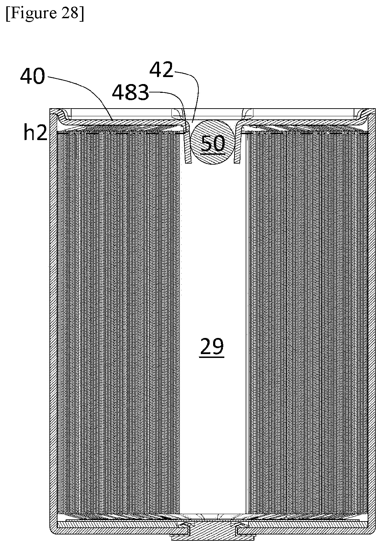

As shown in FIG. 28, the liquid injection port 42 may be provided at a location aligned with the core hollow portion 29 of the electrode assembly 20. In addition, the circular tube 48 defining the liquid injection port 42 may extend into the inside of the core hollow portion 29.

Accordingly, as the circular tube 48 extends further downward than the upper end of the separator surrounding the inner circumference of the core hollow portion 29, the electrolyte solution may be smoothly injected into the can 10 in the process of injecting the electrolyte solution through the liquid injection port 42 without damaging the separator surrounding the inner circumference of the core hollow portion 29 by the electrolyte solution discharged through the lower end of the liquid injection port 42.

The injected electrolyte solution gradually fills the space inside the can 10 up to the upper end of the can 10, and even at reaching the lower end of the circular tube 48, air is smoothly discharged out of the can through the air hole 483, thereby smoothly immersing the electrode assembly 20 without causing an air pocket.

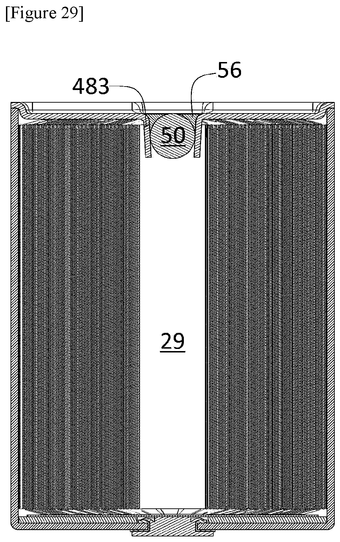

After liquid injection is completed, the closing member 50 is inserted into the liquid injection port 42 as shown in FIG. 28, and the closing member 50 is sealed and fixed with the sealing and fixing material 52 as shown in FIG. 29. At the same time, the sealing and fixing material 52 shields the air hole 483.

### [FOURTH EMBODIMENT]

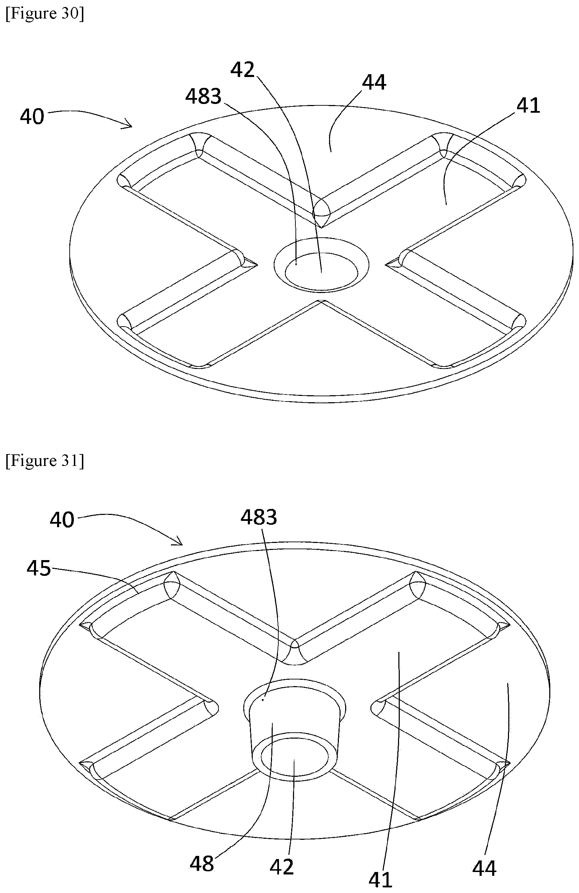

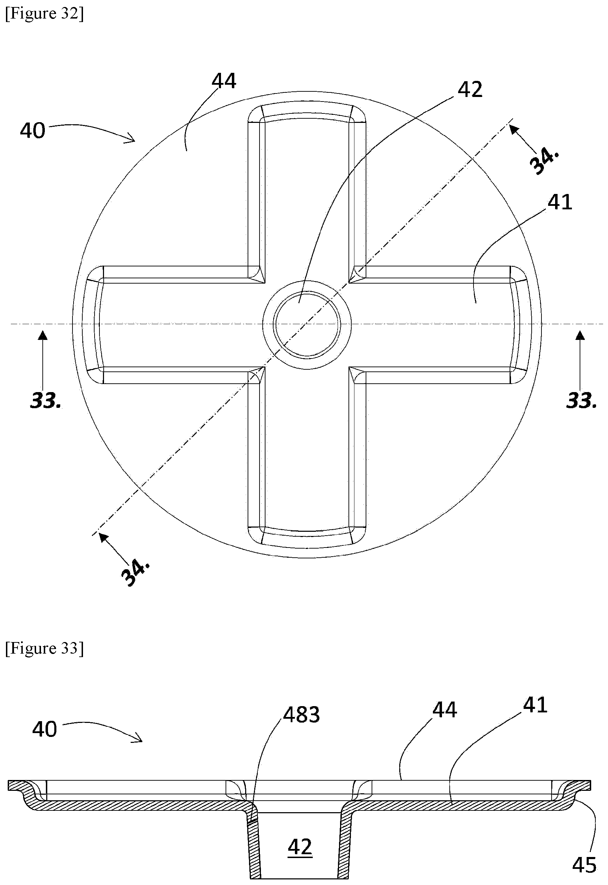

Hereinafter, the structure of the cap 40 applied to the battery cell of the fourth embodiment will be described in detail with reference to FIGS. 30 to 34.

The cap 40 may be manufactured from a circular metal sheet. The cap 40 has an electrode connecting part 41 recessed in the first direction corresponding to the axial direction of the battery cell 72. The electrode connecting part 41 may be formed by molding the metal sheet using a press.

The bottom surface of the electrode connecting part 41 is in close contact with and bonded to the notched tab 27 of the second electrode 22 of the electrode assembly 20. The electrode connecting part 41 manufactured by press processing a metal sheet has a thickness slightly thinner than the thickness of the metal sheet. Accordingly, when a laser is irradiated onto the surface of the electrode connecting part 41, the local heat generated by the laser may melt and bond the surface of the notched tab 27 in contact with the electrode connecting part 41 and bottom surface thereof.

A plurality of electrode connecting parts 41 may be provided. The fourth embodiment illustrates a structure wherein four electrode connecting parts 41 are arranged radially at equal intervals of about 90 degrees in the circumferential direction. The electrode connecting part 41 extends in the radial direction, and a welding portion W for bonding the electrode connecting part 41 to the notched tab 27 of the second electrode 22 of the electrode assembly 20 may have a welding line shape formed in the radial direction to correspond to the extending direction of the electrode connecting part 41as shown in FIG. 27.

According to the embodiment, a line-shaped welding portion W extending in the radial direction is formed per plurality of electrode connecting parts 41.

The cap 40 provides a base surface 44 that is in contact with the floor when the battery can 10 is placed with the cap 40 of the battery can 10 facing the floor. The base surface 44 is provided at a location more elevated than the electrode connecting part 41 and is disposed between two neighboring electrode connecting parts 41 in the circumferential direction.

Accordingly, with the electrode connecting part 41 and the notched tab 27 in close contact with each other by pressing the base surface 44 at both sides of the electrode connecting part 41 in the circumferential direction with a jig, it is possible to weld the electrode connecting part 41 and the notched tab 27 by irradiating a laser onto the surface of the electrode connecting part 41 as shown in FIG. 27. As a result, welding may be performed reliably as the pressure of the jig against the base surface 44 at both sides of the welding line brings the electrode connecting part 41 into close contact with the notched tab 27 along the lengthwise direction of the welding line.

Pair of electrode connecting parts 41 facing each other with respect to the center of the cap 40 is arranged on a straight line passing through the center of the cap 40. Accordingly, the welding line of the two electrode connecting parts 41 aligned in-line may be formed by only one movement of the laser welding machine. For example, assuming that a first electrode connecting part, a second electrode connecting part, a third electrode connecting part and a fourth electrode connecting part are arranged sequentially along the circumferential direction in the cap 40 of the fourth embodiment, the first electrode connecting part and the third electrode connecting part may be welded at once, and the second electrode connecting part and the fourth electrode connecting part may be welded at once.

In addition, according to the embodiment, even when the base surface 44 provided at both sides of the first electrode connecting part and the third electrode connecting part arranged in-**line with** respect to the center of the cap 40 is pressed with a jig, the cap 40 may behave as a rigid body without being warped or bent despite the pressure of the jig because of large secondary moment of inertia formed by the recessed shape of the second electrode connecting part and the fourth electrode connecting part.

In the embodiment, by configuring the four electrode connecting parts 41 as above, all of the four electrode connecting parts 41 may be welded with two laser scan traces.

When the number of processed electrode connecting parts 41 is too large, the strength of the cap 40 made of metal sheet may be weakened. Additionally, when only two or three electrode connecting parts 41 are formed, it is difficult to construct a cross-section for securing a sufficient secondary moment of inertia along the circumferential direction.

When the four electrode connecting parts 41 on the cap 40 are provided to form a "+" shape as shown, the welding process may be performed accurately and easily, the warping resistance and the bending resistance of the cap 40 may also be secured, and the strength of the cap 40 may be prevented from weakening due to molding process. That is, while the cap 40 functions as a current collector plate, it is preferable to maintain the strength for original function of closing the open end of the battery can 10.

The outer side edge of the cap 40 in the radial direction has a shape that may be bonded to the other axial end of the sidewall portion 11 of the battery can 10. Accordingly, it is preferable that the outer side edge of the cap 40 in the radial direction is provided with a circular outer circumferential surface or inner surface.

The cap 40 according to the fourth embodiment has an edge with circular inner surface, and the electrode connecting part 41 is recessed from the inner side in the radial direction further inward in the axial direction than the circular inner surface of the edge. The circular inner surface of the cap 40 is in contact with the axial end surface of the sidewall portion 11 of the battery can 10 as shown in FIG. 27, and the bonding area M welded by a laser irradiated from the outer circumference side of the battery can 10 toward the inner side in the radial direction may be formed.

Here, the outer side edge of the recessed portion in the radial direction for forming the electrode connecting part 41 constitutes the outer wall. The outer wall may constitute a press-fitted outer wall 45 having an outer diameter corresponding to the inner diameter of the battery can 10. As a result, when assembling the cap 40 to the battery can 10, each of the press-fitted outer walls 45 of the plurality of electrode connecting parts 41 is connected to the inner circumferential surface of and press-fitted into the battery can 10 as shown in FIG. 27 to guide the center alignment of the cap 40 with respect to the battery can 10.

According to the fourth embodiment, since the four press-fitted outer walls 45 are evenly arranged along the circumferential direction and are in contact with the battery can 10 at some portion of the circumference of the inner circumferential surface, the cap 40 may be easily press-fitted into the battery can 10 without high press-fitting force of the cap 40.

As described above, the cap 40 according to the embodiment is advantageous in that manufacturing thereof is facilitated since the press-fitted outer wall 45 is molded together when the electrode connecting part 41 is molded.

In addition, according to the structure of the cap 40, since the laser for welding the cap 40 and the battery can 10 is irradiated in the radial direction, there is no risk of damaging the electrode assembly 20 by the laser being directly irradiated into the battery can 10 even when the inner surface of the edge of the cap 40 and some portion of the end of the sidewall portion 11 of the battery can 10 are not in close contact with each other due to unexpected errors.

According to the fourth embodiment, since the base surface 44 of the cap 40 is located further outward than the bonding area M between the cap 40 and the battery can 10 in the axial direction, the protection of the bonding area M is facilitated by not being in direct contact with the ground even when the battery can 10 of FIG. 29 is turned over and erected in upright orientation.

By applying the cap 40 described above, it is not necessary to use a current collector plate to electrically connect the tab of the second electrode 22 to the battery can 10, thereby reducing the number of parts and assembly man-hours, and securing more internal volume to increase energy density. In addition, the cap 40 electrically connected to the battery can 10 is directly connected to the metal foil 23 of the second electrode of the electrode assembly 20 through the welding portion W extending in the radial direction such that the current path is evenly distributed, thereby greatly reducing the internal resistance.

The liquid injection port 42 is provided at the center portion of the cap 40. The liquid injection port 42 may be provided on the bottom surface of the cap 40, that is, on the electrode connecting part 41 of the cap 40.

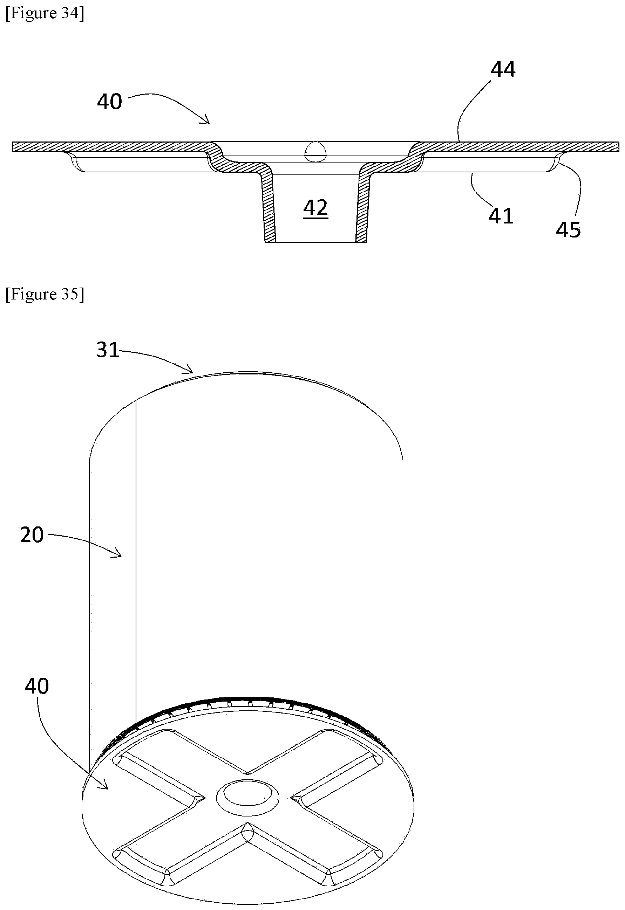

The liquid injection port 42 provided at the center of the cap 40 may be a passage through which equipment for welding the first electrode terminal 13 and the current collector plate 31 of the first electrode 21 enters and exits. Accordingly, unlike the above-describe assembly sequence shown in FIGS. 25 to 29, the cap 40 may be inserted into the battery can 10 with the cap 40 bonded to the tab of the second electrode 22 of the electrode assembly 20 as shown in FIG. 35 when the electrode assembly 20 is placed inside the battery can.

That is, as shown in FIG. 35, with the current collector plate 31 bonded to the tab of the first electrode 21 of the electrode assembly 20 and the cap 40 bonded to the tab of the second electrode 22, the electrode assembly 20 may be accommodated in the battery can 10. In addition, the welding between the current collector plate 31 and the first electrode terminal 13 may be performed through the liquid injection port 42 of the cap 40 and the core hollow portion 29 of the electrode assembly 20.

### [MANUFACTURING METHOD OF THE BATTERY CELL]

Since the cap 40 according to the fourth embodiment described above functions as a current collector plate for the second electrode and also has the original function of a cap, the cap 40 according to the fourth embodiment differs from a conventional battery cell provided with a current collector plate for the second electrode in the manufacturing method thereof.

In addition, since the cap 40 is provided with the liquid injection port 42, and the liquid injection port 42 may be used as a passage for the bonding process of the current collector plate 31 and the first electrode terminal 13, the manufacturing methods of the battery cell may be more diverse.

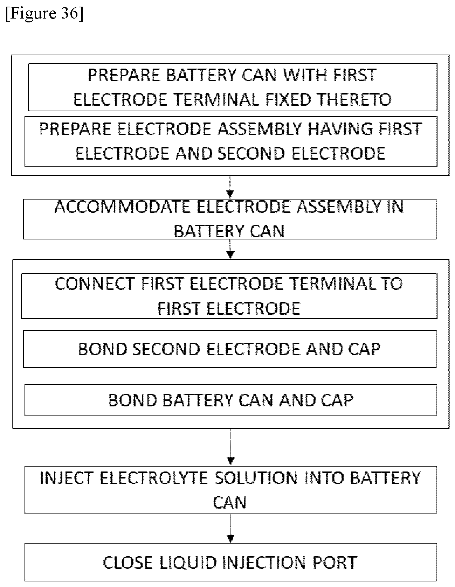

First, a manufacturing method of a battery cell according to a fifth embodiment will be described with reference to FIG. 36. The fifth embodiment corresponds to the manufacturing method of the battery cell of FIGS. 25 to 29.

The manufacturing method includes: preparing a battery can 10 with a first electrode terminal 13 fixed thereto; and preparing an electrode assembly 20 having a first electrode 21 and a second electrode 22. Here, at one axial end of the electrode assembly 20, the first electrode 21 and a current collector plate 31 may be bonded and connected.

Thereafter, the electrode assembly 20 is inserted into the battery can 10 with the current collector plate facing the bottom portion 12 of the battery can 10, and the current collector plate 31 of the electrode assembly 20 is bonded to the first electrode terminal 13 fixed to the bottom portion 12 of the battery can 10 by a method such as welding.

Thereafter, the open end of the battery can 10 is covered with a cap 40. Here, preferably, the electrode connecting part 41 of the cap 40 and the tab of the second electrode 22 of the electrode assembly 20 in close contact with each other are bonded, and the perimeter of the open end of the battery can 10 and the edge of the cap 40 are then bonded.

Thereafter, the electrolyte solution is injected into the battery can 10 through the liquid injection port 42 of the cap 40.

And, finally, by applying the sealing structure of the liquid injection port described above, the liquid injection port 42 of the battery can 10 is closed and sealed with a closing member 50 and a sealing and fixing material 52.

According to such manufacturing method, a bonding operation of a separate current collector plate for the second electrode 22 is not required, and the bonding of the cap 40 and the battery can 10 may be performed before injecting the electrolyte solution into the battery can 10, thereby preventing the electrolyte solution from being affected by the bonding heat.

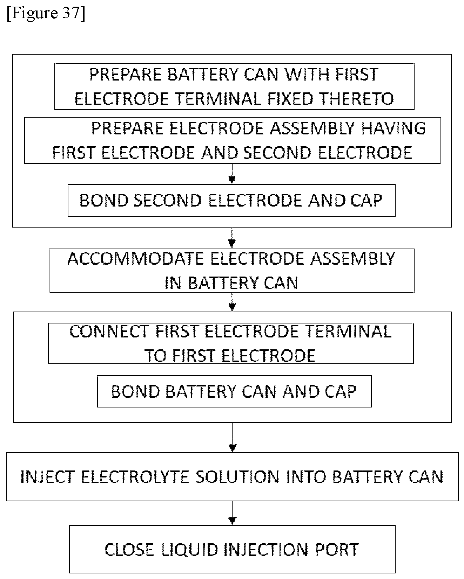

Hereinafter, the manufacturing method disclosed in FIG. 37 will be described.

The manufacturing method includes: preparing a battery can 10 with a first electrode terminal 13 fixed thereto; and preparing an electrode assembly 20 having a first electrode 21 and a second electrode 22. Here, at one axial end of the electrode assembly 20, the first electrode 21 and a current collector plate 31 may be bonded and connected. Additionally, the electrode connecting part 41 of the cap 40 and the tab of the second electrode 22 may be connected to the other axial end of the electrode assembly 20.

That is, the cap 40 may be bonded to the second electrode of the electrode assembly before the electrode assembly is accommodated in the battery can.

Thereafter, the electrode assembly 20 is inserted into the battery can 10 with the current collector plate facing the bottom portion 12 of the battery can 10. During this process, the cap 40 covers the open end of the battery can 10.

Thereafter, the current collector plate 31 of the electrode assembly 20 is bonded to the first electrode terminal 13 fixed to the bottom portion 12 of the battery can 10 by a method such as welding, and the perimeter of the open end of the battery can 10 and the edge of the cap 40 are then bonded.

Thereafter, the electrolyte solution is injected into the battery can 10 through the liquid injection port 42 of the cap 40.

And, finally, by applying the sealing structure of the liquid injection port described above, the liquid injection port 42 of the battery can 10 is closed and sealed with the closing member 50 and the sealing and fixing material 52.

According to such manufacturing method, a bonding operation of a separate current collector plate for the second electrode 22 is not required, the electrolyte solution is prevented from be affected by the bonding heat since the bonding of the cap 40 and the second electrode 22 and the bonding of the cap 40 and the battery can 10 may be performed before injecting the electrolyte solution into the battery can 10, and assembly equipment may be further simplified by integrating the cap 40 into the electrode assembly 20 first instead of managing the cap 40 separately.

In this way, when manufacturing a battery cell by applying the cap 40 provided with the liquid injection port 42 aligned axially with the core hollow portion 29 of the electrode assembly 20, the manufacturing methods of the battery cell may be more diverse.

In addition, since neither strong pressure nor high-temperature heat is applied to the cap 40 when sealing the liquid injection port 42, there is no risk of the internal structure of the battery can 10 being damaged or denaturalized or ignited by heat.

### [BATTERY PACK AND VEHICLE]

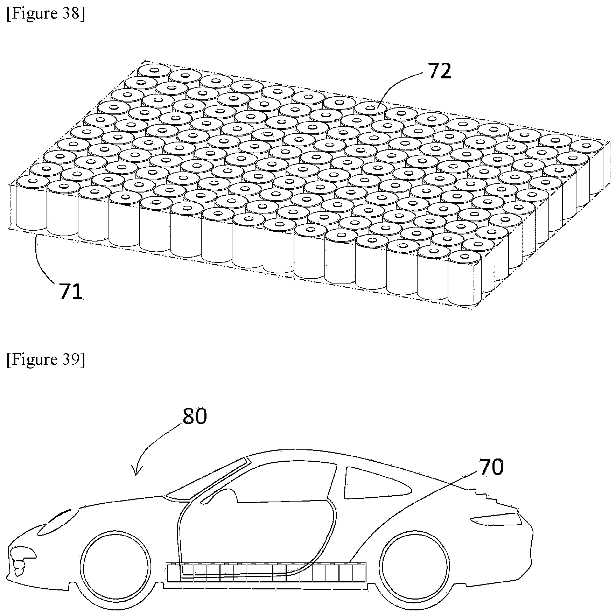

Referring to FIG. 38, the battery cell 72 employing the sealing structure of the liquid injection port described above and/or manufactured by the manufacturing method described above may be accommodated in the housing 71 of the battery pack 70. The battery pack 70 may be constructed using a battery module which is an intermediate form of assembly, or constructed directly without a battery module as shown.

Since the above-described battery cell 72 itself has a large volume, there is no particular difficulty in embodying the battery pack 70 even without using an intermediate structure of so called battery module. In addition, since the second electrode is connected through the cap, the battery cell 72 has a lower internal resistance and higher energy density. Therefore, the energy density of the battery pack 70 may be embodied even higher.

The battery pack 70 with such increased energy density is capable of storing the same energy with reduced volume and weight. Therefore, when the battery pack 70 employing the battery cell 72 is mounted on a vehicle such as a vehicle 80 shown in FIG. 39 that uses electricity as an energy source, the driving range of the vehicle compared to energy may be further expanded.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery cell comprising:
a can (10) with one open end;
an electrode assembly (20) accommodated in the can (10);
a cap (40) covering the open end of the can (10);
a liquid injection port (42) provided at the can (10) or the cap (40);
a closing member (50) inserted in the liquid injection port (42); and
a sealing and fixing material (52) fixing the closing member (50) inserted in the liquid injection port (42), within the liquid injection port (42), wherein
the liquid injection port (42) has a perforated section extending in a first direction crossing outside and inside of the battery cell, and has a cross-section defined by an intersection of an imaginary plane extending in a second direction intersecting the first direction and an inner circumferential surface of the liquid injection port (42),
the closing member (50) extends in the first direction, and has a cross-section defined by an intersection of the imaginary plane extending in the second direction and an outer circumferential surface thereof,
at least a portion of the closing member (50) in the first direction is disposed within the perforated section of the liquid injection port (42),
the sealing and fixing material (52) is interposed between the inner circumferential surface of the liquid injection port (42) and the outer circumferential surface of the closing member (50) in the second direction,
the sealing and fixing material (52) seals a space between the inner circumferential surface of the liquid injection port (42) and the outer circumferential surface of the closing member (50) to provide a sealed section corresponding to at least a portion of the perforated section in the first direction and fixes the closing member (50) within the injection port (42), and
the sealing and fixing material (52) has a melting point lower than that of the can (10) or the cap (40) where the liquid injection port (42) is provided and the melting point of the closing member (50).

2. The battery cell of claim 1, wherein a minimum cross-section of the liquid injection port (42) is smaller than a maximum cross-section of the closing member (50), and is disposed further inward the sealed section in the first direction.

3. The battery cell of claim 1, wherein the liquid injection port (42) is defined by an inner circumferential surface of a circular tube (48) extending from the can (10) or the cap (40) in the first direction.

4. The battery cell of claim 3, wherein an inner end of the circular tube (48) in the first direction extends in the axial direction to be inserted in a core hollow portion (29) of the electrode assembly (20).

5. The battery cell of claim 4, wherein the circular tube (48) is provided with an air hole (483) for discharging an air in the can (10) when an electrolyte solution is injected through the liquid injection port, the air hole (483) being disposed in the sealed section.

6. The battery cell of claim 1, wherein the outer circumferential surface of the closing member (50) is not in direct contact with the inner circumferential surface of the liquid injection port (42).

7. The battery cell of claim 6, wherein the sealing and fixing material (52) is integrally fixed to the outer circumferential surface of the closing member (50).

8. The battery cell of claim 7, wherein the sealing and fixing material (52) comprises a synthetic resin layer (54) coated on a surface of the closing member (50).

9. The battery cell of claim 6, wherein an elastic modulus of the sealing and fixing material (52) is smaller than that of the closing member (50).

10. The battery cell of claim 9, wherein the closing member (50) comprises a metal material.

11. The battery cell of claim 9, wherein the sealing and fixing material (52) has a cross-section defined by an intersection of an imaginary plane extending in the second direction and an outer circumferential surface thereof, and
the cross-section of the sealing and fixing material (52) at the sealed section is larger than that of the liquid injection port (42) at the sealed section before being inserted into the liquid injection port (42) so as to be compressed inward in the second direction by the inner circumferential surface of the liquid injection port (42) to correspond to the cross-section of the liquid injection port (42) after being inserted into the liquid injection port (42).

12. The battery cell of claim 11, wherein the cross-section of the sealing and fixing material (52) at a location further inward the sealed section in the first direction gradually becomes smaller toward inside of the can (10) in the first direction.

13. The battery cell of claim 12, wherein an inner end of the sealing and fixing material (52) in the first direction covers the closing member (50) in the first direction.

14. The battery cell of claim 11, wherein the cross-section of the closing member (50) at a location further inward the sealed section in the first direction gradually becomes smaller toward inside of the can (10) in the first direction.

15. The battery cell of claim 6, wherein the closing member (50) includes a ball (50), and
the sealing and fixing material (52) is coated integrally on the ball (50).

16. The battery cell of claim 15, wherein the inner circumferential surface of the liquid injection port (42) extends parallel to the first direction in the sealed section.

17. The battery cell of claim 1, wherein the outer circumferential surface of the closing member (50) is in contact with the inner circumferential surface of the liquid injection port (42).

18. The battery cell of claim 17, wherein the outer circumferential surface of the closing member (50) and the inner circumferential surface of the liquid injection port (42) are in line contact in a circumferential direction.

19. The battery cell of claim 17, wherein the outer circumferential surface of the closing member (50) and the inner circumferential surface of the liquid injection port (42) are in contact with each other at a section where the cross-section of the liquid injection port (42) gradually becomes smaller toward inside of the can (10) in the first direction.

20. The battery cell of claim 19, wherein a decrease rate of a radius defining the cross-section of the liquid injection port (42) toward the inside of the can (10) in the first direction is constant at predetermined portions of the perforated section in the first direction further inward and outer than where the outer circumferential surface of the closing member (50) and the inner circumferential surface of the liquid injection port (42) are in contact with each other.

21. The battery cell of claim 17, wherein the outer circumferential surface of the closing member (50) and the inner circumferential surface of the liquid injection port (42) are in contact with each other at a section where the cross-section of the closing member (50) gradually becomes smaller toward inside of the can (10) in the first direction.

22. The battery cell of claim 17, wherein a rate at which the cross-section of the closing member (50) decreases toward inside of the can in the first direction is greater than a rate at which the cross-section of the liquid injection port (42) decreases toward the inside of the can in the first direction in a predetermined section of the perforated section inner than where the outer circumferential surface of the closing member and the inner circumferential surface of the liquid injection port are in contact with each other.

23. The battery cell of claim 17, wherein a rate at which the cross-section of the closing member (50) decreases toward inside of the can in the first direction is smaller than a rate at which the cross-section of the liquid injection port (42) decreases toward the inside of the can in the first direction in a predetermined section of the perforated section outer than where the outer circumferential surface of the closing member and the inner circumferential surface of the liquid injection port are in contact with each other.

24. The battery cell of claim 17, wherein a location where the outer circumferential surface of the closing member (50) and the inner circumferential surface of the liquid injection port (42) are in contact with each other is provided further inward in the first direction than where the closing member (50) has a maximum cross-section.

25. The battery cell of claim 17, wherein the sealed section is provided further outward in the first direction than where the outer circumferential surface of the closing member (50) and the inner circumferential surface of the liquid injection port (42) are in contact with each other.

26. The battery cell of claim 25, wherein the closing member (50) comprises a metal material, and
the sealing and fixing material (52) comprises a solder (56) filled between the outer circumferential surface of the closing member (50) and the inner circumferential surface of the liquid injection port (42) with the outer circumferential surface of the closing member (50) in contact with the inner circumferential surface of the liquid injection port (42).

27. The battery cell of claim 26, wherein the closing member (50) comprises a ball (50).

28. The battery cell of claim 1, wherein the liquid injection port (42) is provided at the cap (40), and
an edge of the open end of the can (10) is bonded to an edge of the cap (40) by thermal bonding.

29. The battery cell of claim 28, wherein the thermal bonding of the can (10) and the cap (40) comprises one process selected from welding, brazing and soldering.

30. The battery cell of claim 28, wherein the electrode assembly (20) comprises a first electrode (21) and a second electrode (22), and a tab of the first electrode (21) and a tab of the second electrode (22) are disposed at two axial ends of the electrode assembly (20), respectively,
a first electrode terminal (13) electrically insulated from and fixed to a bottom portion (12) is installed at the bottom portion (12) provided on the opposite side of the open end in the axial direction of the can (10), and
the first electrode (21) of the electrode assembly (20) is connected to the first electrode terminal 13 through a current collector plate 31 bonded to the tab of the first electrode (21).

31. The battery cell of claim 28, wherein the electrode assembly (20) comprises a first electrode (21) and a second electrode (22), and a tab of the first electrode (21) and a tab of the second electrode (22) are disposed at two axial ends of the electrode assembly (20), respectively, and
the cap (40) includes an electrode connecting part (41) bonded to the tab of the second electrode (22) of the electrode assembly (20).

32. The battery cell of claim 31, wherein the bonding of the tabs of the cap (40) and the second electrode (22) comprises one process selected from welding, brazing and soldering.

33. The battery cell of claim 31, wherein the liquid injection port (42) is provided at the center portion of the cap (40), and
the electrode connecting part (41) extends radially around the liquid injection port (42).

34. The battery cell of claim 31, wherein the cap (40) has a base surface (44) extending outward from the electrode connecting part (41) in the axial direction.

35. A battery cell manufacturing method comprising:
a can preparing step of preparing a can (10) having a sidewall portion (11), a bottom portion (12) connected to one axial end of the sidewall portion (11), and an open end provided at other axial end of the sidewall portion (11), and sealing, insulating and fixing a first electrode terminal (13) at a center of the bottom portion (12);
an electrode assembly preparing step of preparing an electrode assembly (20) provided with a first electrode (21) and a second electrode (22) with a tab of the first electrode (21) and a tab of the second electrode (22) disposed at two axial ends thereof, respectively;
a cap preparing step of preparing a cap (40) provided with a liquid injection port (42);
a first electrode terminal connecting step of accommodating the electrode assembly (20) in the can (10) in a manner that the tab of the first electrode (21) faces the bottom portion (12) of the can (10), and connecting the tab of the first electrode (21) and the first electrode terminal (13) after the can preparing step and the electrode assembly preparing step;
a second electrode connecting step of connecting the cap (40) to the tab of the second electrode (22) after the electrode assembly preparing step and the cap preparing step;
a cap fixing step of fixing the cap (40) to the can (10) after the first electrode terminal connecting step;
a liquid injecting step of injecting an electrolyte solution into the can (10) after the first electrode terminal connecting step, the second electrode connecting step and the cap fixing step; and
a liquid injection port closing step of: inserting a closing member (50) into the liquid injection port (42); and sealing a space between an inner circumferential surface of the liquid injection port (42) and an outer circumferential surface of the closing member (50) with a sealing and fixing material (52) having a melting point lower than a melting point of the cap (40) provided with the liquid injection port (42) and a melting point of the closing member (50) after the liquid injecting step and the cap preparing step and fixing the closing member (50) within the injection port (42).

36. The battery cell manufacturing method of claim 35, wherein the liquid injection port closing step is performed by press-fitting the closing member (50) having the sealing and fixing material (52) coated thereon into the liquid injection port (42) to elastically compress the sealing and fixing material (52) between the outer circumferential surface of the closing member (50) and the inner circumferential surfaces of the liquid injection port (42).

37. The battery cell manufacturing method of claim 35, wherein the liquid injection port closing step is performed by soldering the outer circumferential surface of the closing member (50) to the inner surface of the liquid injection port (42) with a sealing and fixing material (52) with the closing member (50) inserted into the liquid injection port (42), and the outer circumferential surface of the closing member (50) in line contact with the inner circumferential surface of the liquid injection port (42).

38. A battery pack comprising a battery cell of any one of claims 1 to 34.

39. A vehicle comprising a battery pack of claim 38.
